(19) Europäisches Patentamt
European Patent Office
Office européen des brevets

(11) **EP 4 759 405 A1**

(12) **EUROPEAN PATENT APPLICATION**

(43) Date of publication:
**17.06.2026 Bulletin 2026/25**

(21) Application number: **25221378.0**

(22) Date of filing: **08.12.2025**

(51) International Patent Classification (IPC):
**B01J 19/24** $^{(2006.01)}$

(52) Cooperative Patent Classification (CPC):
**B01J 19/2405; B01J 19/243; B01J 19/2485;**
**B33Y 50/00; B33Y 80/00; G06F 30/12; G06F 30/17;**
B01J 2219/00011; B01J 2219/00015;
B01J 2219/0002; B01J 2219/00243;
B01J 2219/00795; B01J 2219/2401;
B01J 2219/2402; B01J 2219/2404;          (Cont.)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **11.12.2024 EP 24219027**

(71) Applicant: **Evonik Operations GmbH**
**45128 Essen (DE)**

(72) Inventors:
• **Rehage, Hendrik**
**45721 Haltern am See (DE)**
• **Lehmann, Maximilian**
**63776 Mömbris (DE)**
• **Schaack, Senada**
**60438 Frankfurt am Main (DE)**

(74) Representative: **Evonik Patent Association**
**c/o Evonik Industries AG**
**IP Management**
**Postcode 84/339**
**Rodenbacher Chaussee 4**
**63457 Hanau (DE)**

(54) **SPIRAL REACTOR FOR PRODUCING PRODUCTS AND MANUFACTURING METHOD FOR THE SPIRAL REACTOR**

(57)     The invention relates to a reactor for the synthesis of at least one product from at least two reactants, wherein the reactor extends parallel to a central longitudinal axis and comprises the following:
- n reactor segments which likewise extend parallel to the central longitudinal axis, wherein n is an integral value >= 2, comprising a longitudinal axis, at least one reaction module, at least one end wall and/or at least one side wall, more particularly two end walls and two side walls;
- at least two input-side, common supply channels to the n reactor segments;
- at least one output-side, common discharge channel from the n reactor segments, wherein the central longitudinal axis is a central spiral axis, wherein the reactor segments are arranged directly adjacent in spiral direction around the central longitudinal axis, and wherein the at least two input-side, common supply channels are embodied spirally and/or the at least one output-side, common discharge channel is embodied spirally. Further encompassed is a method for the evaluation and production of the reactor.

Fig. 1

Fig. 1

**(Cont. next page)**

EP 4 759 405 A1

(52) Cooperative Patent Classification (CPC): (Cont.)
B01J 2219/2411; B01J 2219/2443; G05B 19/4099;
G06F 2113/10; G06F 2119/18

**Description**

The invention relates to a reactor which is producible via an additive manufacturing method, and to a computer-integrated method for designing such a reactor.

The use of additive manufacturing methods for apparatuses and, in particular, chemical reactors enables almost unlimited diversity and complexity for the respective technical design. However, the evaluation of a possible technical design requires elaborate and lengthy calculation steps. For each design it is necessary to generate CAD models by means of CAD software, for example, which are subsequently evaluated and possibly supplementarily simulated and checked in relation to the respective end use. This evaluation of a technical design with regard for example to strength or thermal properties is elaborate owing to the complexity of chemical relationships. The number of designs to be evaluated is therefore limited.

An additive manufacturing method (AM method for short), also called 3D printing, enables highly complex technical designs for apparatuses and containers in chemical apparatus construction. The complexity is higher and there are greater degrees of freedom in three-dimensional space. Consequently, by means of 3D printing, chemical process equipment can be extensively adapted as required, through targeted geometric optimization (see Capel, A. J., Rimington, R. P., Lewis, M. P., & Christie, S. D. (2018). 3D printing for chemical, pharmaceutical and biological applications. Nature Reviews Chemistry, 2(12), 422-436).

The possibilities for optimizing processing units in all three dimensions is limited by very complex computer simulations, so-called "multi-physics simulation" (see Kaya, U., Gopireddy, S., Urbanetz, N., Nopens, I., & Verwaeren, J. (2022). Predicting the hydrodynamic properties of a bioreactor: Conditional density estimation as a surrogate model for CFD simulations. Chemical Engineering Research and Design, 182, 342-359).

Just simulating a simple reactor for a liquid phase reaction requires the calculation of heat and mass transfers for all process fluids used, the reaction kinetics, and also heat transfer through the solid components of the reactor. Three-dimensional simulation of this simple set of equations requires very high computer powers that currently limit the optimization possibilities to a small number of usable design parameters (see Biedermann, M., Meboldt, M. (2020). Computational design synthesis of additive manufactured multi-flow nozzles. Additive Manufacturing, 35, 101231).

Although these disadvantages are increasingly easier to manage, with ever more powerful computers and computer programs, there is a regular problem when optimized, complex reactor designs that are producible only via additive manufacturing methods are to be transferred, in a scale-up from the laboratory scale which is in the range of a few litres of reactor volume, to the next application stage, such as a pilot plant scale and/or an industrial production scale. Highly convoluted flow channels, in part integrated into one another, cannot be simply enlarged in cross section for greater capacities, for example, because this would affect all adjacent structures and the material or thermodynamic processes therein. As a result, for the next-larger scale and in some cases even for minor variants, a reactor that is possibly similar, but new in terms of its flow regime, must in principle be designed and produced. Such adaptations or enlargements of the scale then usually mean that the apparatus constructor has to obtain a new official marketing authorization, which is very time-consuming and expensive.

Thus, the need and the object is to show a reactor and an improved method for its creation which have the aforementioned disadvantages only to a lesser extent or eliminate them completely.

The object is achieved by a reactor design or a reactor for the synthesis of at least one product from at least two reactants, wherein the reactor extends parallel to a central longitudinal axis (L) and comprises the following:

- n reactor segments which likewise extend parallel to the central longitudinal axis (L), wherein n is an integral value >= 2, comprising an interior (208), a longitudinal axis ($L_{RS}$), at least one reaction module, at least one end wall and/or at least one side wall, more particularly two end walls and two side walls;
- at least two input-side, common supply channels to the n reactor segments for the at least two reactants and optionally an HE medium, in particular the reaction modules of the reactor segments;
- at least one output-side, common discharge channel from the n reactor segments for the at least one product and optionally the HE medium, **wherein**

the central longitudinal axis (L) is a central spiral axis, wherein the reactor segments are arranged directly adjacent in spiral direction around the central longitudinal axis (L), and wherein the at least two input-side, common supply channels are embodied spirally and/or the at least one output-side, common discharge channel is embodied spirally.

In this case, the reactor segments branch off from the common, spiral supply channels, so that these are advantageously arranged parallel to each other and are flow-traversed in the same direction.

Although herein the individual functional or structural units (hereinafter referred to for short as "unit") of the reactor are described separately in each case, internal structures (elements) may regularly be assigned at least twice. This is especially true for elements such as ceilings or walls, since adjacent units, such as the units of fluid channels/portions, reactor segments, spiral channel units, the spiral channel units, the central reactor portion, etc., generally have common, adjoining ceilings or walls. Hence this kind of assignment of an element to a unit of the reactor does not mean that this element cannot also be at least partially assigned to, and comprised by, a further, adjacent unit. This also results in particular from an additive manufacturing method (AM method) by means of an additive manufacturing device (AM device), by means of which the reactor is produced in a substantially monolithic form.

The at least two input-side supply channels form a first, input-side channel portion, which closes the interiors of the reactor segments on the input side, and/or the at least one output-side discharge channel forms a second, output-side channel portion, which closes the interior of the reactor segments on the output side. In other words, the respective subportions of the channel portion, at the input and the output side, in particular the directly radially adjacent subportions, each close an interior of a reactor segment on the respective side. Input- and/or output-side channel portions may have one or more non-flow-traversed portions.

In this case, the input-side channel portion and/or the output-side channel portion each spans a theoretical space or gap above or below the interiors of the reactor segments which is aligned at right angles or substantially at right angles to the central longitudinal axis L or the longitudinal axis $L_{RS}$ of the respective reactor segment.

In other words, the main flow lines of the supply channels and/or the discharge channels each span a plane, in particular a respective single, common plane on the input and output sides, which is aligned at right angles or substantially at right angles to the longitudinal axis L of the reactor or the longitudinal axis $L_{RS}$ of the respective reactor segment. The spanning of a plane is not to be understood here in a strictly mathematical sense, so that a slight rise or descent of a main flow line within a supply or discharge channel, owing for example to partially altered cross section, is to remain insignificant. Advantageously, the theoretical planes are parallel to each other and/or lie within the respective theoretical space on the input or output side.

The "synthesis" of products is not intended to be further restricted in the present case, and encompasses all chemical reactions that can take place by means of liquid and/or gaseous reactants in a channel structure of a reaction portion or channel, including in the presence of auxiliaries, such as solvents, catalysts, etc. Reactants, auxiliaries and products can also be present as solids in the form of small particles, examples being the solid particles on the micrometre or nanometre scale, provided that these can be entrained and transported by the gaseous and/or liquid substances. It is possible here advantageously for at least one heat exchange medium (HE medium) to carry out heating or cooling, depending on the respective synthesis.

"Product" herein means the principally desired chemical substance for the purpose of which the reactor serves and is operable. The term "reaction mixture" means any substances and substance mixtures that form temporarily or permanently after mixing of at least two reactants in the reaction module of the reactor segment. Products are substances/components of the reaction mixtures, and the terms "product" and "reaction mixture" are sometimes used synonymously for linguistic simplification.

"Fluid" herein refers to any flowing substances, such as reactants, reaction mixtures, products and/or HE media.

In the present case, expressions such as "central" or "parallel" do not mean mathematically exact indications, but rather mean "substantially" central, parallel, etc., in particular taking into account customary manufacturing tolerances and fluctuations. Such expressions also serve in particular for linguistic illustration, not in the mathematical sense of definition or quantification.

A "reactor segment" comprising at least one reaction module refers to a functional and spatial structural unit which is provided in n-fold number in the reactor. In this present case, the fluidic flow traversal of the reactor segment is occasionally referred to for simplification, although reactants, auxiliaries and reaction mixture on the one hand and HE media on the other hand are conducted in separate channels or flow spaces, in particular at least partially in a reaction module.

In the present context, "reaction module" means an object that comprises channels and is required for a specific reaction or synthesis and is inserted into a reactor segment or evaluation segment, so that a "product" is formed temporarily or permanently in the reaction module of the reactor segment after the mixing of at least two reactants. The reaction module is connected at one end by one (channel) branch each to one of the supply channels and by the other end to a discharge channel. The included channels of a reaction module have cross-sectional geometries and, if required, at least one mixing portion, a separation portion, a branch, an intermediate feed, a winding, etc.

For example, the "reaction module" class comprises a collection of digital designs of reaction modules that a user can select. These may be parameterizable, with respect for example to the cross-sectional geometry of the included channels, the mixing and/or separation portions, branches, winding, length, etc. Furthermore, the collection may include designs for the routing of channels for HE media, which are likewise parameterizable.

The "splinemaster" sub-class here inherits from the "interface" super-class. The "splinemaster" class defines all the methods that the "reaction module" class requires in order to generate, from a specific object, a model, especially a 3D model, as a reaction module, as a reactor or as an evaluation segment in the second program module. Attributes encompassed in the "splinemaster" class include, in particular, threadlines of the potential flow paths of the reaction modules and the associated channels.

In general, each "reaction module" class itself represents a type of module for a specific reaction or synthesis. As a result, each "reaction module" class that is created generates a specific construction plan or build plan for a reaction module. The objects generated by a "reaction module" class are the reaction modules required for the reaction and inserted into a reactor segment or evaluation segment.

In the present case, at least one end wall and at least one side wall are assigned to a reactor segment. "Side wall" here means an element that at least partially delimits or separates reactor segments that are adjacent in spiral direction. "End wall" means an element that at least partially delimits or separates radially adjacent reactor segments.

However, the terms "end and side wall" do not necessarily mean a flat, wall-like element, but may also mean a grid dimension, for example for a reactor segment. This is the case, for example, when the reactor is largely made of solid material and essentially has no fairly large inner spaces, except for channels in which the fluids can flow. Furthermore, end and/or side wall also encompasses embodiments in which end and side walls merge transitionlessly or fluidly into each other, namely in the case of embodiments in which reactor segments have, for example, a round, oval or polygonal interior.

The reactor segments all have an input side at which the reactants are introduced and an output side at which the product is discharged and taken off. The reactor segments are oriented in such a way that all n input and output sides are on the same respective side, so that the input-side, common supply channels can supply all reactor segments or their reaction modules. Similarly, the output-side, common discharge channels can receive and discharge the product and, if applicable, HE media from the n reactor segments.

In the present case, "embodied spirally" means that a geometrically significant magnitude runs substantially spirally around the central spiral axis L. This also dictates the internal basic form of the reactor. This can be, in particular, all or some of the following units or elements:

- profile of a (central) centre axis in the supply or discharge channel;
- arrangement of all parallel longitudinal axes of the n reactor segments at right angles and along a spiral; and/or
- profile of the base face or (horizontal) cut face of at least one end wall in the form of a spiral.

Here, the central longitudinal axis (L) is a central spiral axis, wherein the reactor segments are arranged directly adjacent in spiral direction around the central longitudinal axis (L), and wherein the at least two input-side, common supply channels are embodied spirally and/or the at least one output-side, common discharge channel is embodied spirally.

In the present context, CAD software stands for "Computer-Aided Design Software" and is a digital application to create, edit and analyse detailed digital technical drawings and digital 3D models of apparatus and systems in, for example, chemical apparatus construction. A CAD model - "Computer-Aided Design model" - is a digital representation of a chemical apparatus, created, displayed and/or edited using CAD software. In particular, the digital 3D models are used to simulate operating states of the reactor, such as flows, thermal conditions, heat transfers or pressure conditions, for example. "CAD model" and "3D model" are presently used synonymously.

The core of the modular structure and the particularly easy scalability of the reactor lies in the fact that the central longitudinal axis (L) is a central spiral axis around which the inlet-side supply channels in particular wind and from which the mutually parallel reaction modules branch off, these modules being substantially identical in construction. Advantageously, both the supply channels and the discharge channels are embodied as spirals which wind around the one central spiral axis.

One advantageous and/or improved embodiment of the reactor may be that the reactor segment has end walls, wherein the end walls of the n reactor segments represent segments of a spiral face and/or spiral wall; in particular, the end walls and/or their segments together embody a continuous, spiral wall or wall face.

In the present case, "end wall" means an element or portion of an element that is opposite the central longitudinal axis of the reactor. With regard to an individual reactor segment, a distinction is made between an "inner" and an "outer" end wall, with the "inner" end wall being arranged radially inside and thus closer to the central longitudinal axis. The "outer" end wall of an individual reactor segment is arranged radially outside, i.e. more distant from the central longitudinal axis than the inner end wall.

Another advantageous and/or improved embodiment of the reactor may be that the spiral

i) is an Archimedean spiral and the central longitudinal axis (L) is the central spiral axis of the Archimedean spiral, or
ii) is a circle involute and the central longitudinal axis (L) is the central spiral axis of the circle involute or the centre point of the central unit element, such as of a circle or a square, primarily of a unit circle or unit square.

The particular advantage of these two spiral forms is that the pitch spacing is constant or substantially constant.

The Archimedean spiral can be described according to the following formula (I):

$$(I) \qquad r(\varphi) = a * \varphi$$

The circle involute can be described according to the following formula (II): _

$$(II) \qquad x = a_{arc} * (\cos \varphi + \sin \varphi) \; and \; y = a_{arc} * (\sin \varphi - \cos \varphi)$$

In contrast to most types of spiral, the circle involute can only be described in canonical parameter representation, not in the form of polar coordinates, and so the Archimedean spiral is preferred.

Another advantageous and/or improved embodiment of the reactor may be that the end walls are segments of an Archimedean spiral.

Advantageously, the n reactor segments have a hollow interior and the end wall is a continuous, spiral end wall which on subportions forms the inner end wall for individual reactor segments and on subportions forms the outer end wall for individual reactor segments.

In this way, a very maximally dense arrangement of the reactor segments relative to each other can be achieved, because reactor segments adjacent in spiral direction have common side walls at least partially, ideally completely, and radially adjacent reactor segments have common end walls at least partially.

Another advantageous and/or improved embodiment of the reactor may be that at least one of the input-side, common supply channels has a diminishing flow cross section in flow direction and/or the at least one output-side, common discharge channel has an expanding flow cross section in flow direction.

Another advantageous and/or improved embodiment of the reactor may be that the change in the area (areal size) of the respective increasing or decreasing flow cross section is formed in spiral direction for at least one location, for at least one subsection and/or in a subportion of the channel portions at least as a function of the area total of the flow cross sections of the fluid channels of the reactor segments connected upstream.

In this case, the supply and discharge conduits of the HE media must be considered separately from the reactants and auxiliaries involved in the synthesis. Basically, the dimensioning of the flow cross section in the supply channels and/or discharge channels depends on rheological and physical conditions, the desired flow velocity and flow volume (throughput), temperatures, pressure, and also viscosity, density, density change due to synthesis, compressibility, etc., so that a separate consideration and calculation may be required for each specific application.

However, in the case of fluids that are incompressible under process conditions, there is generally a direct linear dependence between outflowing fluid volume and with regard to the change in cross section.

In the case of compressible fluids, such as gases, the pressure-dependent density has a significant influence for the change in cross section, and also in the case of syntheses in which the physical state of at least one substance changes. This is the case with, for example, gas formation, evaporation, crystallization, precipitation, gel formation, etc. Furthermore, there may be substance-dependently temperature-dependent viscosities which are significant from the standpoint of dimensioning.

This highlights a further advantage of the reactor and design concept, namely that the multitude of substance-dependent influencing parameters per reaction module and/or reactor segment can be tested on a real construction scale, but on a very much smaller process scale, as detailed in connection with the method of the invention.

Another advantageous and/or improved embodiment of the reactor may be that the reactor comprises n input-side channel portions and n output-side channel portions, wherein

- the at least two input-side, common supply channels each are or represent overall at least one subportion of the respective input-side channel portion, and/or
- the at least one output-side, common discharge channel each is or represents overall at least one subportion of the respective output-side channel portion, and wherein respectively one input-side channel portion and one output-side channel portion are each assigned to a reactor segment whose reaction module in the respective channel portion is connected to the respective supply or discharge channel.

In other words, all input-side subportions of the channel portions together form the complete, spiral supply channels and all output-side subportions of the (discharging) channel portions together form the complete discharge channels, which may be embodied spirally.

In an advantageous embodiment, it may be the case that at least one discharge channel is a collection chamber or mixing chamber in which the product or the HE medium can be introduced without a flow regime that features channel-like direction. The collection chamber or the mixing chamber here has a flow diameter which is greater than the sum of the flow diameters of the n reaction modules. It has emerged surprisingly that it is sufficient to produce process uniformity on the input side for all reactor segments and in particular their reaction modules. In particular, with regard to the HE medium, it is sufficient for the operation of the n reaction modules if discharge takes place into an open collection chamber.

A further advantageous and/or improved embodiment of the reactor may be that at least one channel portion comprises at least one non-flow-traversed subportion.

Here, one advantageous variant may be such that the non-flow-traversed subportion is embodied monolithically as solid material.

Another advantageous and/or improved embodiment of the reactor may be that at least one of the two channel portions and/or at least one subportion thereof has the shape, at least over a partial length in cross section, such as a polynomial, more particularly of a pentagon, hexagon, rhombus or parallelogram.

The channel portions can thus have a honeycomb or gridlike basic structure in vertical section. Adjacent channel portions advantageously have uniform external dimensions in spiral direction, wherein the flow cross sections of the respective subportions are different in spiral direction. The flow cross sections of the subportions are in particular different such that the same or substantially the same pressure conditions and/or flow conditions are present at the entry to each reactor segment or the respective reaction module.

Another advantageous and/or improved embodiment of the reactor may be that the reactor segments each comprise two substantially radially aligned side walls aligned transverse to the spiral direction, and at least two end walls aligned in spiral direction, wherein the reactor segments with their side walls are arranged directly adjacent in spiral direction around the longitudinal axis (L), wherein more particularly two reactor segments adjacent in spiral direction each have a common side wall.

The side walls and/or the end walls may be of double-walled implementation and/or have different wall thicknesses at least over a partial face or subsection. This may be advantageous in order to compensate for the not completely identical width of windings in the case of, for example, the Archimedean spiral inside the reactor.

Another advantageous and/or improved embodiment of the reactor may be that the reactor segments or their theoretical interiors, minus inner fluid channels and/or channel structures which are formed and/or determined by the reaction modules, are shaped monolithically, more particularly shaped from a single material (solid material). In this way, a higher strength of the reactor as a whole is achieved.

Another advantageous and/or improved embodiment of the reactor may be that the reactor segments have a flow-traversable interior and are connected to a feed channel for an HE medium via a recess as supply opening in the associated subportion and via a recess as discharge opening in the associated subportion of the discharge channel for the HE medium, so that the HE medium can flow freely in the flow-traversable interior.

In one advantageous embodiment, the recesses are simple openings in the channel carrying the HE medium. In an alternative embodiment, it may be the case that the supply opening has the form of a slotted or annular nozzle which is directed at a location or a part of the reaction module, in particular an adjoining mixing portion and/or a part of the reaction portion.

Another advantageous and/or improved embodiment of the reactor may be that two reactor segments adjacent in radial direction each have the partial face of an end wall as common end wall.

In this case, the common end wall forms at least partially the radially outer end wall of the radially inner reactor segment and at least partially the radially inner end wall for the radially outer reactor segment.

Another advantageous and/or improved embodiment of the reactor may be that at least one side wall and/or at least one end wall of at least one reactor segment has a surface or surface profile which is round, concave or curved towards the interior.

As stated above, the shape and/or dimension of the end wall regularly follows the geometry of the spiral profile and of the reactor segments arranged in spiral direction. On the other hand, the geometry of the common side wall between two reactor segments adjacent in spiral direction can in principle be freely selected. However, the most compact arrangement of reactor segments is when they have flat common side walls which have substantially parallel surfaces on both sides.

Another advantageous and/or improved embodiment of the reactor may be that at least one reactor segment does not comprise a reaction module. The at least one reactor segment can thus be a pure spacing segment that is not flow-traversed in a direction parallel to the longitudinal axis (L).

Such dummy or placeholder segments without a reaction module may be useful if the reactor is to have predetermined outer dimensions, but the number n of reactor segments required for the management of the reactor does not result in these outer dimensions. A certain number of dummy or placeholder modules can then be used to achieve the desired outer dimensions of the reactor. The dummy or placeholder segments can be flow-traversed by an HE medium to avoid internal stresses.

In addition, dummy or placeholder segments without a reaction module can be provided in order to bring a sensor holder and the respective sensor element to a desired place in the interior of the central reactor portion. In this way, even middle reactor segments can be sensor-monitored, without too many reactor segments having to be pervaded by a sensor holder.

Another advantageous and/or improved embodiment of the reactor may be that the at least one reactor segment comprises at least one pure flow module.

In this embodiment of a reactor segment or the reactor segment, in the "reaction module" no reaction takes place and only passage of a fluid is carried out. Such passage can be advantageous if, for example, a diluent fluid, an inhibitor and/or a pH regulator or any other auxiliary must be supplied in the discharge channel for the product or the product mixture.

Another advantageous and/or improved embodiment of the reactor and the reactor segment may be that the at least one reaction module

- is arranged in the interior of the reactor segment so as to be amenable to surrounding flow on all sides,
- is arranged at least for a partial length on the surface of a side wall, wherein the respective side wall forms at least one wall or a wall portion of the reaction module over at least a partial length, or
- is embodied as a pipe-in-pipe system or pipe-on-pipe system, so that a fluid channel in which an HE medium may be carried surrounds the reaction portion, i.e. the channel carrying the reaction mixture, at least partially, in particular completely, at least over a partial length.

Particularly for syntheses with large exothermic temperature production, it may be advantageous if such a pipe-in-pipe or pipe-on-pipe system is formed only on a subsection of the reaction portion, in order in particular to attenuate the initial reaction. In the further course of the reaction portion, it may be advantageous if no further cooling is carried out by an HE medium, so that the fluid channel carrying the HE medium is arranged spatially distanced from the reaction portion. In an analogous manner, such a pipe-in-pipe or pipe-on-pipe system can be provided if heating is required only on a first subsection of the reaction module in the case of a very endothermic reaction.

Another advantageous and/or improved embodiment of the reactor may be that at least one connecting element for the feeding of substances and media is arranged only adjacent to the last reactor segment in spiral direction, and at least one connecting element for the discharge of substances and/or media is arranged only adjacent to the first reactor segment.

Here, "first reactor segment in spiral direction" means the reactor segment that is arranged closest to the central spiral axis and longitudinal axis. Similarly, the "last reactor segment in spiral direction" means the reactor segment that, starting from the central spiral axis and longitudinal axis, is furthest away from it in spiral direction.

Advantageously, the supply channels are arranged in vertical direction below the central reactor portion, so that the connecting elements are also arranged vertically below the last reactor segment. Furthermore, it is advantageous if the discharge channels are arranged in vertical direction above the central reactor portion, so that the connecting elements for the discharge are arranged vertically above, adjacent to the first reactor element.

The lower, deep supply routing has the advantage that there cannot be an uncontrolled flow of reactants solely due to gravity. Furthermore, the influence of density differences of substances due to gravity is largely excluded.

The invention further encompasses a computer-implemented method which serves and is embodied for the digital modelling and production of a reactor for a chemical reaction (synthesis) for a target performance of a synthesis of a product from at least two reactants or reactant streams, wherein the reactor comprises the following:

at least two feed channels, at least one expulsion channel, n parallel-connected reactor segments, each comprising a longitudinal axis (L) and a reaction module, wherein n is an integral value greater than or equal to 2, wherein in a FIRST PHASE of the method:

- at least one reactor segment with a reaction module is designed, as a function 1 / n of the reactor, with a first program module (definition step 1), wherein
- the at least one reactor segment is designed with the first program module as an evaluation segment (definition step 2), wherein each evaluation segment has connections for all fluids required for the operation of the (eventual) reactor, wherein an evaluation step comprises the following:

  - creation of a model, in particular a 3D model, of the at least one evaluation segment, and display in a second program module,
  - provision of at least one construction data set by the second program module for an AM device, and

wherein the at least one evaluation segment is produced physically by means of the AM device in a first program module,

- the (real) operation of the at least one evaluation segment takes place with recording of at least one significant process measurand for a defined test run time,
- the recorded measured values of the at least one process measurand recorded are evaluated, wherein

  i) in the non-specification case of the evaluation segment, the first phase is repeated starting with the definition step 1, wherein at least one parameter of the reactor and/or of the reactor segment is changed; in particular, a reaction module and/or at least one parameter of the reaction module is changed, and
  ii) in the specification case of the evaluation segment,

in a SECOND PHASE, an export data set to the reactor is generated by means of the first program module from n parallel-connected, specification-compliant reactor segments corresponding to the specification-compliant evaluation segment, and wherein the reactor segments are arranged

- directly adjacent and parallel to each other with respect to their longitudinal axes and
- along (also parallel to) the at least one feed channel and the at least one discharge channel, and

wherein each reactor segment or its reaction module has at least one connection to a feed channel and a connection to at least one discharge channel, and wherein

in the second program module, a model, in particular a 3D model, of the reactor is generated.

Furthermore, the model of the reactor can be displayed in the second program module, at least one construction data set can be provided by the second program module for an AM device and/or the reactor can be produced physically by means of the AM device in an AM method on the basis of the construction data set. The display of the model, in particular of a 3D model, will take place regularly here, so that the user of the program modules can check the developed (modelled) result, here the reactor, visually and with the functional possibilities of the second program module.

"Specification case" means that the evaluation segment is embodied according to specification, since in the test period, for the evaluation segment investigated, the respective synthesis can be carried out at least according to specified quality criteria or the quality criteria have been exceeded. The quality criteria (specification) here are, for example, the product quality, throughput, product purity, process stability and/or controllability during operation of the evaluation segment, especially manageability of pressure and temperature. Similarly, "non-specification case" means that in the evaluation step, at least one quality criterion for example could not be adhered to at all, not for a sufficiently long time and/or not with sufficient stability.

By "specification-compliant reactor segments" or "reactor segments corresponding to the specification-compliant evaluation segment" are meant reactor segments that are formed analogously to the evaluation segment according to the specification case, with essentially only the necessary structural adjustments depending on the respective position along the spiral being different from the specification-compliant evaluation segment.

Owing to the extensive structural similarity of the evaluation segment to the reactor and the possibility of operating and testing this segment autonomously, the evaluation segment can also be considered or referred to as a "prototype reactor" or "prototype reactor segment".

Here, "as a function 1 / n of the reactor" means that a target output or target throughput for the industrial reactor is specified which is to be realized subsequently by n reactor segments as n parallel-connected individual reactors each with a proportion of 1/n of the output or 1/n of the throughput, these n reactor segments or n individual reactors being formed as an industrial reactor.

In the present context, "first program module" means a software program which can be executed on a computer or processor and which is designed to execute object-oriented programming in a scripting language for the creation (also called "modelling") of digital depictions of workpieces as a mapping data set, in particular for the direct or indirect generation of an export data set for the second program module, which is, in particular, a piece of CAD software or a CAD program module.

Furthermore, "an export data set to the reactor" means that the data, classes and attributes relevant for the second program module are generated and data-processed in the first program module in such a way that the second program module can use them to generate and display a 3D model of the reactor.

In the present case, "design" means that, in the first program module, basic parameters are entered as the first input data set and, based on this, a first output data set of the reactor segment or evaluation segment is generated, which is passed to the second program module, wherein there (in the second program module) further parameters can be entered as an input data set, and then the reactor segment or evaluation segment is represented (displayed) as a digital 3D model.

A particular advantage of the reactor and design concept is that the large number of substance-dependent influencing parameters per reaction module and/or reactor segment can be tested on a real construction scale, but on a very much smaller process scale, for which only one evaluation segment is required in each case. It may be advantageous to produce several evaluation segments with different reaction modules in the second definition step and then to measure them in parallel in the laboratory or pilot plant. All process parameters obtained can be utilized directly for the operation of the reactor on an industrial scale, without the need for further scale-up.

The evaluation segment advantageously corresponds in its essential structure to the first or the last (n-th) reactor segment along the spiral. The constructional embodiment of the evaluation segment by analogy to one of the two end reactor segments on the spiral is therefore particularly preferable because the outer, final side wall can be formed largely identical in each case, and, in addition, at least similar connecting elements can also be arranged there for the supply and discharge of the fluid from and to the outside.

Particularly preferred is the formation of an evaluation segment at the first, innermost reactor segment, which is closest to the central spiral axis and thus has the greatest curvature in the channel portions and the end walls. In this way, the reactor segment as evaluation segment is simulated as an autonomous tube reactor or tubular reactor, which has the greatest constructional limitations. In other words, in this way it is ensured that in any other reaction module in particular the identical reaction module can be accommodated if it can be arranged in the first reactor segment.

Ideally, in the second definition step, several evaluation segments with different reaction modules will be designed and produced simultaneously and measured in the same evaluation step in the laboratory or pilot plant. All process parameters obtained can be utilized directly for the operation of the reactor on an industrial scale, without the need for further scale-up.

The basic parameters include the essential substance data and reaction data, as far as is relevant for construction, such as volume flows, dwell times, intermediate feeds of fluids, number of fluids supplied, number of fluids to be expelled, etc. Designing includes, in particular, the selection and establishment

    i) of the respective reaction module with the essential functions or portions, such as mixing portion, reaction portion, division portion, intermediate feed and

    ii) of the essential aspects of heat exchange, if necessary, such as substance of the HE medium, flow regime, such as free-flowing, pipe-in-pipe system or pipe-on-pipe system.

Advantageously, two or more reactor segments each with different reaction modules and each as a function 1 / n of the reactor are designed in the first definition step in the first phase. This enables parallel evaluation and determination of the respective suitability and/or faster finding of an optimum in the second phase.

In an analogous manner, the two or reactor segments each with different reaction modules are advantageously designed as evaluation segments in the second definition step.

Of course, it can also be advantageous to manufacture the identical evaluation segment several times in order to carry out tests in parallel in the second phase on structurally identical evaluation segments, with regard to the same or different parameters, e.g. process parameters, different fluid. Of course, it can also be useful to commission different laboratories to carry out tests independently of each other, in order for example to increase the validity of measurement results.

In the present case, "CAD program module" (also called "second program module") means a piece of CAD construction software for the digital modelling and pictorial representation (depiction) of a workpiece and/or for simulation of fluid-mechanical, chemical and/or physical processes and states of a workpiece. Also, in particular, for the generation of a control data set for an AM device and/or an AM method.

The expression of the provision of a data set or similar formulations that the respective data set is generated by the generating and providing program module and is transferred directly to the subsequent, receiving program module that accepts and data-processes this data set. Furthermore, provision of a data set also means that the generating and providing program module saves the respective data set at least temporarily on an internal data memory or data storage medium, from where it can be removed or read out as a data set, as and when required or on instruction, by the following, receiving program module. In the present case, the intention is to encompass all and any necessary software functions and steps for data preparation and conversion with the provision and/or reception of a data set, in order to strengthen their utility for the receiving program module. Necessary data connections, data lines and/or transmission and/or reception units for data transmission and reception are also known and provided.

In this context, "real operation" means that the evaluation segment, except for the reduced flow rate of 1/n, is operated and measured in the same way as the reactor formed from the n reactor segments is to be operated. This also includes determining the allowable and/or optimal process parameters. In the conventional sense, therefore, the evaluation segment is not a "laboratory reactor", which must be operated under process parameters that are in principle not relevant to the process and must subsequently be adapted accordingly in the scale-up. Instead, the evaluation segment is the complete nth part of the reactor, for which no further scale-up is required any longer.

Thus, the essential process measurands or process parameters and also the length of the test run time are very dependent on the respective synthesis, and it is advantageous to carry out a synthesis until a desired and reproducible product quality is achieved. The performance of testing and evaluation of the recorded measured values of process measurands is highly dependent on the respective synthesis and is usually known to the skilled person; tests can be carried out in particular in accordance with recognized norms and standards.

In the present context, "AM methods" means, in particular, thermal melting processes for a metallic material and associated devices, such as those known for example from ISO/ASTM 5290:2015(E). When applying material to form the next material layer, but also for positioning and/or focusing the energy input, a 3D scan can be provided by means for example of a camera, such as a CCD camera, or a 3D laser scanner. The material can be applied primarily in the powder bed or by direct application via an application nozzle, with the required energy input being carried out primarily as a laser beam or electron beam.

In an advantageous or improved embodiment of the method, it may be that in the first definition step of the first phase, as a function of the reactor, in the reactor segment connection faces are defined and established which are available independently of the arrangement of the reactor segment in the sequence of the n reactor segments to each other, as a connection for at least one fluid channel of the reaction module.

It is necessary that the free channel ends of the reaction module can always be connected to the respective feeding or expulsive channel portion and also that the length of the channels of the reaction module have substantially identical length.

For this purpose, the shadow areas of the supplying and/or discharging channel portions of the first reactor segment with the greatest curvature are brought into line with the nth reactor segment with the least curvature. These are brought into line such that advantageously it is possible to determine the areas or areal fraction which are always available in all reactor segments for the connection of the respective channel of the reaction module in the respective subportion.

Subsequently, a universal connection or breakthrough point for the channels of the reaction module can be defined for each channel portion or subportion, so that largely identical reaction modules can always be assigned to substantially identical connection or breakthrough points in each reactor segment. The user can make such a determination of the universal connection points by moving and visually evaluating the digital base/shadow areas. Alternatively, this can be done by means of object-oriented programming and/or by other at least partially software-supported steps for finding the appropriate overlap areas.

The finding of substantially identical opening widths breakthroughs through which an HE medium can flow into the interior of a reactor segment is carried out in an analogous manner.

In a further advantageous or further-improved embodiment of the method, it may be that the first program module is embodied for the object-oriented and script-based processing of instructions and programming.

In a further advantageous or further-improved embodiment of the method, it may be that the first program module comprises an interpreter as third program module and/or interacts with an interpreter as third program module.

In the present case, it has emerged as being particularly advantageous if the second program module is a piece of CAD software, such as ANSYS Discovery (2023), ANSYS 2024 R2 or a comparable program module (software product/package) comprising an integrated first program module that is based on a scripting and programming language such as APL, BASIC, Forth, Perl, Python, Ruby, PHP, in particular Python, and advantageously has an integrated interpreter. Preferably, the programming language is Python 2.7, also called "IronPython".

"Object-oriented programming" presently refers in particular to a programming method as defined by ISO/IEC 2382-15.

In the present context, "interpreter" means a software program which can be executed on a computer and is designed to execute a plurality of software commands (also called "instructions") in a defined command format (also called "scripting language" or "scripting format") after direct or indirect input by the user. In particular, the interpreter is set up and designed to interpret the scripts of the first program module. The interpreter can be integrated into the first program module or represent a subprogram module thereof.

Using the interpreter, questions and evaluation can be posed to the specific script-based data set of the first program module, such as "get/calculate data", in order for example to obtain specific detailed statements or estimates regarding, for example, the reactor 100 or its structural units. In this case it is not necessary to give the instruction "plot_CAD" and await the display of the possibly modified 3D model of the reactor. This simplifies input and significantly shortens development time, because the display of the 3D model would have to be executed by the second program module, e.g. the CAD program, and is much more time-consuming.

For instance, the interpreter is able, via the request (command) "get/calculate date", for example, to readily ascertain whether

- a certain number n of reactor segments can be arranged if the maximum permissible reactor extent is specified,
- a dwell time for the reaction mixture is possible safely, at selected flow velocities and maximum height of the reactor,
- the size of the heat exchange area within the reactor segment, or
- which maximum channel length of a reaction module can be accommodated without collision in the interior of each reactor segment, for a specified diameter to the spline and single winding of the spline.

In the present context, "source data" means a plurality of instructions that the interpreter can read, analyse and execute upon instruction from a user by directly executing the dedicated program code. In this case, the interpreter can directly execute the dedicated program code as and when required via intermediate steps ultimately as machine code for the respective computer system. The interpreter is able particularly advantageously to provide the user with a fault analysis and information on the reactor, the segments and all structural units and elements.

In a further advantageous or further-improved embodiment of the method, it may be the case that the first program module and/or the third program module is connected or is connectable to a memory module, wherein by means of the first program module and/or the third program module, source data can be retrieved from the at least one memory module and processed, wherein the source data comprise or represent at least the following:

- classes and/or methods in the scripting language, especially an object-oriented programming and scripting language, comprising
- at least one "reaction module" class or "module" class, in particular a reaction module that can be parameterized in the scripting language.

In this case, "classes" possess properties and functions for interaction, e.g. a "print" function. The classes are related to each other via a hierarchy and transmission, also called inheritance, of information (in total, attributes and methods). This hierarchy defines a super-class, which transmits its information to the respective sub-class(es). All attributes and methods (information) of the hierarchically higher class (super-class) are then available to such a hierarchically subordinate class (sub-class) and thus form the basis of the intrinsic information of the sub-class. Each sub-class includes additional, intrinsic attributes and methods (information) that specifically design the respective object or make it parameterizable. A sub-class may itself represent a super-class for hierarchically lower sub-classes and may, similarly, inherit the information.

Advantageously, an "interface" class, a "reactor" class and an "evaluation segment" class are also provided. These three "interface", "reactor" and "evaluation segment" classes advantageously all have the "print" function, which allows different constructional details to be displayed depending on class, when the "print" function is retrieved via the corresponding print command.

For example, the "reaction module" class comprises a collection of digital designs of reaction modules that a user can select. These may be parameterizable, with respect for example to the cross-sectional geometry of the included channels, the mixing and/or separation portions, branches, winding, length, etc. Furthermore, the collection may include designs for the routing of channels for HE media, which are likewise parameterizable.

The concept of a plurality of in part hierarchical classes that inherit the content enables a scalable, parameterizable application that is modular in structure.

The "interface" class, also called the "print" class, is the super-class of the first program module. It acts as an interface to ensure data communication between the objects of the "reaction module", "reactor" and "evaluation segment" classes.

In particular, the "interface" (class name) class can have the following attributes:

　　name, write_access, comp_inlet, comp_outlet, scale_inlet, z_pos_outlet, wall_thickness,
　　plot_adapter, inlet_radius, is_production, number_modules, centre_points,
　　border_points_interface.

In addition, the "interface" class can include the following methods:

　　calculate_interface(),
　　calculate_module_centre_points(),
　　status(),
　　plot_CAD_interface().

Within the classes, the term "interface" refers here to the opening or connection of a channel to the feeding or expulsive channel portion.

The attributes are primarily used to specify the reaction and the building space of the reactor segment or the reaction module. The "write_access" attribute is used, in combination with a set method, as a write protection and allows the user of the program to change values of the attributes only when the write protection is deactivated, i.e. when "write_access = true".

The "calculate_module_centre_points" method is used to calculate the centre points of the reaction modules or reactor segments along the spiral or spiral channel unit and stores the x and y coordinates in the "centre_points" attribute. Since the information on the centre points of the reaction modules or reactor segments is required for both the prototype and the reactor and is also used for the external function for the placement of the sensor holders, the calculation of these centre points is implemented in the interface in order advantageously to reduce the writing effort.

The "status" method allows a user to read out all attributes of the reaction module individually or together.

The "calculate_interface" method is retrieved by the "plot_CAD_interface" method and calculates the geometrically transformed data of a universal connection and breakthrough point. These data are stored in the "border_points_interface" attribute.

Finally, the "plot_CAD_interface" method is used to provide the calculated data for universal interfaces in the second program module, here the ANSYS Discovery CAD software, to perform "evaluation segment" without disruption. Owing to the hierarchy, the "interface" class receives all production-specific attributes that a "reaction module" class object must have in order to generate a reactor segment using the "reactor" or "evaluation segment" classes.

In a further advantageous embodiment of the method, it may be the case that the source data include at least one "splinemaster" class, in particular as a sub-class, preferably as a sub-class directly subordinate to the "interface" class.

The "splinemaster" sub-class here inherits from the "interface" super-class. The "splinemaster" class defines all the methods that the "reaction module" class requires in order to generate, from a specific object, a model, especially a 3D model, as a reaction module, as a reactor or as an evaluation segment in the second program module. Attributes encompassed in the "splinemaster" class include, in particular, threadlines of potential flow paths of the reaction modules and the associated channels.

If the class of the module type is subordinate to the "splinemaster" sub-class, then this class inherits all the required attributes from the "splinemaster" class and thus also from the "interface" class. This class hierarchy thus ensures that each downstream class, in this case of the "reaction module" type, has the same class structure.

In general, each "reaction module" class itself represents a type of module for a specific reaction or synthesis. As a result, each "reaction module" class that is created generates a specific construction plan or build plan for a reaction module. The objects generated by a "reaction module" class are the reaction modules required for the reaction and inserted into a reactor segment or evaluation segment.

In a further advantageous or further-improved embodiment of the method, it may be the case that the reactor is a spiral reactor and in the SECOND PHASE an export data set for the reactor is generated by means of the first program module from n parallel-connected, specification-compliant reactor segments, which are arranged along at least one spiral feed channel and/or at least one spiral discharge channel.

By means of the second program module, the following digital models and/or structural units are constructed, among other things, by means of the software programs therein:

- the n reactor segments along and vertically to a spiral which, as a model, form the essential part of the central reactor portion;
- the spiral feed and expulsion channels or the respective spiral channel units, and
- the connections for the feeding and expulsion of fluids.

In this case, the first program module transfers the export data set to the second program module. Advantageously included here as an attribute from one of the classes is which position and opening size the universal connection or breakthrough points have, which volume flow is to be carried under which process parameters, so that by means of the second program module, the supply and discharge channels and their cross-sectional geometry/profile can be calculated.

In a further advantageous or further-improved embodiment of the method, it may be the case that the reactor segments, evaluation segments and/or the reactor are formed according to at least one of the above embodiments or variants.

In the case of this numbering-up of identical reactor segments, it is necessary for the flow incidence thereon to be identical or substantially the same. Therefore, the profile of the flow cross section in the spiral supply channels, but also in the discharge channels, is of particular importance. In the case of compressible fluids, such as gases, the pressure-dependent density has a significant influence for the change in cross section, and also in the case of syntheses in which the physical state of at least one substance involved changes. This is the case with, for example, gas formation, evaporation, condensation, crystallization, precipitation of solids, gel formation, etc. Furthermore, there may be substance-dependently temperature-dependent viscosities which are significant from the standpoint of dimensioning.

This highlights the particular advantage of the reactor and design concept that the multitude of substance-dependent influencing parameters per reaction module and/or reactor segment can be tested on a real construction scale, but on a very much smaller process scale. Ideally, several evaluation segments with constructionally different reaction modules can be produced simultaneously and measured in parallel in the laboratory or pilot plant. All the process parameters obtained can be utilized directly for the operation of the industrial reactor, without the need for further scale-up. This greatly reduces the design time for an industrial reactor, greatly increases process reliability and, as a rule, product quality too, precisely because of the complete measurement of relevant process parameters on a real scale of the reaction modules included. The design and construction of the supply channels, and of the discharge channels as well where relevant, is then carried out on a follow-on basis and completely independently.

Hence it has proved to be particularly beneficial to perform,

- in a first step, the design, construction and testing of the evaluation segments with the associated reaction modules;
- in a second step, the design and construction of the central reactor portion of the (industrial) reactor, as an independent step and completely independent of supply and discharge channels, and
- in a third, follow-on step, the dimensioning of the supply channels and of the supplying spiral unit (feed), and also of the discharge channels.

"Follow-on" in a third step means that in the second step, constructional parameters are defined, such as geometric attachment and number of reaction modules, which then represent mandatory constructional details for the design and construction of the supply and discharge channels. Calculation by means of software programs and/or digital display on a monitor can essentially be performed simultaneously here.

In a further advantageous or further-improved embodiment of the method, it may be the case that at least one of the following classes are encompassed by the source data and/or are provided on a memory module retrievably for the first program module:

> i) a "reactor segment" class which is embodied and comprises corresponding constructors and methods which require objects in order to form a 1/n part of the reactor by means of the associated, parameterizable reaction module;
>
> ii) an "evaluation segment" class which is embodied and comprises corresponding constructors and methods which require objects in order to form an evaluation segment as a 1/n part of the reactor by means of the associated, parameterizable reaction module;
>
> iii) a "splinemaster" class which is embodied and comprises corresponding constructors and methods which require objects of the "reactor segment" class and/or "evaluation segment" class in order to generate therefrom a 3D model in the second program module;
>
> iv) a "reactor" class which is embodied and comprises corresponding constructors and methods which require objects in order to form a reactor from n objects of the "reactor segment" class;
>
> v) an "interface" class which is embodied and comprises corresponding constructors and methods in order to function as an interface between objects of the "evaluation segment" class and/or of the "reactor" class; and/or
>
> vii) a "spiral channel" class which is embodied and comprises corresponding constructors and methods which require objects in order to form all n reactor segments and the associated, parameterizable n reaction modules as a continuous supply channel or discharge channel of the reactor.

In a further advantageous or further-improved embodiment of the method, it may be the case that the "interface" class represents the super-class, for the communication of objects of classes i), ii) and iii), and/or the "splinemaster" class is situated in the inheritance hierarchy below the "interface" class and above the "reactor segment" class.

In order to inherit all attributes without errors, it may be advantageous if the source data include the "spiral channel" class as a sub-class, preferably as a sub-class to the "interface" class.

In a further advantageous or further-improved embodiment of the method, it may be the case that the "spiral channel" class comprises a function or the "spiral channel" class can be used to retrieve a function which is configured, at least for a length or a subsection, to design the cross-sectional geometry

- of the feed channel with a (flow) cross section or flow diameter (SQ1) reducing in flow direction,
- of the discharge channel with a (flow) cross section or flow diameter (SQ1) enlarging in flow direction and/or
- of at least one input-side or output-side channel portion in analogous manner with a changing (flow) cross section or flow diameter (SQ1).

In a further advantageous or further-improved embodiment of the method, it may be the case that the second program module comprises the first program module and/or third program module, and in particular comprises a (script) editor which comprises the first program module and the third program module.

The script editor, also e.g. an IDE (Integrated Development Environment), enables a facilitated search, presentation and modification of the script contents, especially of lines of the script, by providing corresponding functions for text editing such as refractoring (copy & paste). Furthermore, the IDE provides, for example, functions in order automatically to adapt copied code or script parts (lines, portion) directly to the respective new environment, such as a specific class, method, or script portion.

In a further advantageous or further-improved embodiment of the method, it may be the case that the first definition step 1 comprises at least two substeps:

- **input 1:** input of the main reaction and process parameters, such as material flow, reaction temperature, reaction-dependent temperature characteristics;
- **output 2:** automatic, software-based display/output of suitable reaction modules and/or reactor segments, based on calculations and/or database entries;
- **transfer:** automatic or manual transfer of at least one output reaction module and/or at least one reactor segment into the first program module.

The outputting can also take the form of a so-called look-up table or a simplified, incomplete representation of the respective component or construction portion of the reactor by the second program module, here a piece of CAD software.

In a further advantageous or further-improved embodiment of the method, it may be the case that the first and/or third program module provides the following:

- automatic, software-based display/output of suitable and/or expected measured values for laboratory-side evaluation,
- costs for the manufacture of the reactor, individual reactor segments and/or the reaction modules, calculated on the basis of stored data, for example the required materials quantity, materials costs per unit, energy costs per materials quantity, other costs/cost shares.

It is a common experience with such script-based software products that the script files are constantly evolving and internal status data are stored in the program. However, this results in an element or component that was physically generated on the first manufacture and delivery no longer being identically constructed and dimensioned by the first program module on a subsequent delivery; in the case of spare-part deliveries or instances of damage for example, the former program status should not be used as a template.

It may therefore be provided, in a further advantageous or further-improved embodiment of the method, that the first program module comprises a versioning function or historical function and also a historical unit by means of which a hash value is generated and stored as a function of the time of CAD generation, specifically the 3D model and/or the construction data set; the respective version of the first program module; and the respectively manufactured reactor, reactor segment and/or reaction module, wherein the hash value is transmitted as data of the construction data set to the program unit of a control program of the additive manufacturing device and is applied to an outer surface of the reactor, wherein the hash value allows the first program module to be reset to a functional state at the respective time of generation of the construction data set.

In this way, the first or any subsequent owner or a maintenance employee, of the reactor manufacturer, for example, can read the physically attached and optically readable hash value on the affected element, component or the reactor before placing an order and can provide it as textual or digital information when ordering services or deliveries.

In a further advantageous or further-improved embodiment of the method, it may be the case that the reactor is embodied according to any of Claims 1 to 19, and wherein the reactor is generated physically by means of an additive manufacturing method.

Presently, in particular, the following interpreter languages are meant for the interpreter, such as APL, BASIC, Forth, Perl, Python, Ruby, PHP, especially Python.

Where applicable, all instructions, advantages and definitions relating to the reactor shall apply identically or in an analogous manner to the method as well, and vice versa, with the method being intended in particular for the selection and production of the reactor and being used for this purpose. Likewise, the skilled person shall be hereby invited to combine all embodiments given in the description with each other as and when required, or to swap them with each other, in so far as to do so is reasonable, advantageous.

In addition, the terms "information", "data" or "data sets" are presently used, and are always to be understood as information, data and data sets which are digital and can be processed by software, unless something specific is expressly stated.

In the text below, the solution according to the invention with respect to the reactor and the computer-implemented method is described in detail using exemplary embodiments. In the figures:

Fig. 1        shows a first embodiment of the reactor in two views I., II.;
Fig. 2        shows a detailed representation of the reactor in a further embodiment in two views I., II.;
Fig. 3        shows a detailed representation as a vertical section through a reactor segment;
Fig. 4        shows several detailed representations of embodiments of reaction modules;
Fig. 5        shows an embodiment of a reaction module in three views I., II. and III.;
Fig. 6        shows a detailed and sectional representation of a further embodiment of a reactor segment;
Fig. 7        shows a detailed and sectional representation of the channel portion of a reactor, analogous in particular to Figures 1 and 2;
Fig. 8        shows, in two perspective representations I., II., mutually opposite spiral channel units;
Fig. 9        shows, in two perspective representations, an evaluation segment in one embodiment;
Fig. 10      shows a hyperreactor in spiral form as a schematic representation, comprising a plurality of individual reactors;
Fig. 11      shows a block flow diagram of the computer-implemented method in a first embodiment;
Fig. 12      shows a block flow diagram for two embodiments of the computer-implemented method in two partial representations I., II., and
Fig. 13      shows a detailed representation as a vertical section through a reactor segment.

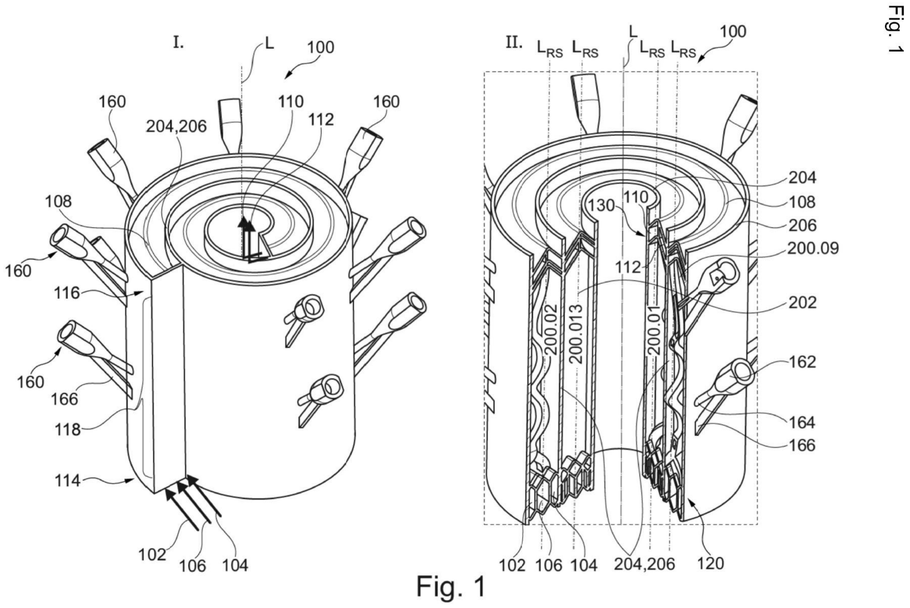

The reactor 100 shown in Figure 1 in partial representation I. is used for the synthesis of at least one product from at least two reactants. The reactor 100 has a spiral arrangement in the form of an Archimedes spiral (hereinafter called just spiral), wherein the dashed longitudinal axis L (hereinafter called longitudinal axis) represents the central spiral axis. The profile of the spiral can be seen at the upper edge, the radial end walls 204, 206 and the gable line 108. The reactor 100 comprises a plurality n of reactor segments 200 arranged in parallel to each other, of which four individual reactor segments 200 are shown open as a vertical section in the partial figure II. These each have a central longitudinal axis $L_{RS}$, which is aligned parallel to the longitudinal axis L and advantageously intersects the gable line 108.

In the text below, the reactor 100 is described relative to gravity in a vertical orientation, wherein the longitudinal axis L is aligned vertically, that is, in the direction of gravity, and, further, the reactor 100 is described in a preferred flow direction for the reactants used, the at least one product generated from them, and the HE media, in that the flow is incident on the reactor 100 from below. This takes place via the supply channels 102, 104, an HE medium for this purpose in parallel via the feed channel 106, which is also fed from below, wherein the at least one product and the outflowing HE medium are discharged vertically at the top via the respective discharge channel 110, 112.

This alignment of the reactor 100 represents only one preferred orientation in space; the reactor 100, with all its elements included, can assume any orientation in space, including an orientation which is inclined, tilted by 90° or tilted by 180° (turned). Furthermore, the incident flow of reactants and HE medium may be applied as and when required in parallel or in countercurrent, wherein the discharge of the at least one product is usually arranged opposite to the introduction of the reactants. Furthermore, the position of the nth reactor segment 200.n, which is the first in the flow direction of the reactants, is consistently shown radially at the very outside, and the position of the first reactor segment 200.1, which is the last in the flow direction of the reactants, is consistently shown radially at the very inside and closest to the longitudinal axis L. This arrangement is also not to be understood restrictively and is only one preferred embodiment, because, in connection with the supply of reactants, generally more conduits must be provided and more space is required than is required for the discharge of the product or the product mixture.

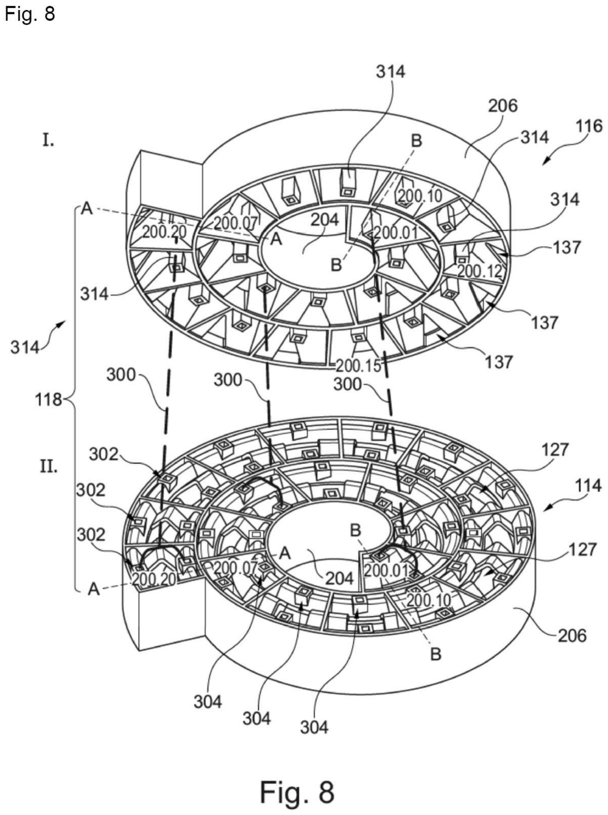

The reactor 100 has at the lower end a first spiral unit 114, which comprises the three feeding spiral channels 102, 104, 106 for the two reactants and the HE medium. At the upper end, a second spiral unit 116 is arranged, which comprises the two discharging spiral channels 110, 112, via which the product and the spent HE medium can be expelled. The spiral units are shown in detail in, for example, Figure 8.

The n = 20 reactor segments 200 extend parallel to the central longitudinal axis L and are arranged along the Archimedes spiral. As shown in the partial representation II., the reactor segments shown open there, 200.01, 200.09, 200.13 and 200.20, like all other reactor segments 200, each comprise a reaction module 300, two end walls 204, 206 curved spirally to the longitudinal axis L, and in each case two side walls 202, 204. The side walls 202, 204 are oriented very largely radially to the longitudinal axis L. The reaction modules 300 have a plurality of portions and each represent a fluidic connection between the lower spiral unit 114 and the upper spiral unit 116 or the respective channels. As can be seen readily in the reactor segment 200.20, the reaction module 300 is connected respectively by one branch to the introduction portions 302, 304, at the bottom to one of the supply channels 102, 104, and by the top end to the discharge channel 110.

Between the two spiral units 114, 116, then, the central reactor portion 118 is arranged, in which the n reactor segments 200 parallel to each other are arranged, which also together substantially form the central reactor portion 118.

The numbering of the reactor segments 200 starting immediately adjacent to the central longitudinal axis L was chosen because this first reactor segment 200.01 always exists in the reactor 100 according to the invention, whereas the position and the number of the reactor segment 200.n with n = max. are dependent on the size of the reactor 100. However, the following designation as the "first" reactor segment should not be understood as imposing a restriction. Even if the feeding of reactants and HE medium via the last, outer reactor segment 200.n with n = max. is advantageous due to very good accessibility, flow direction and numbering are freely selectable and, in particular, invertable.

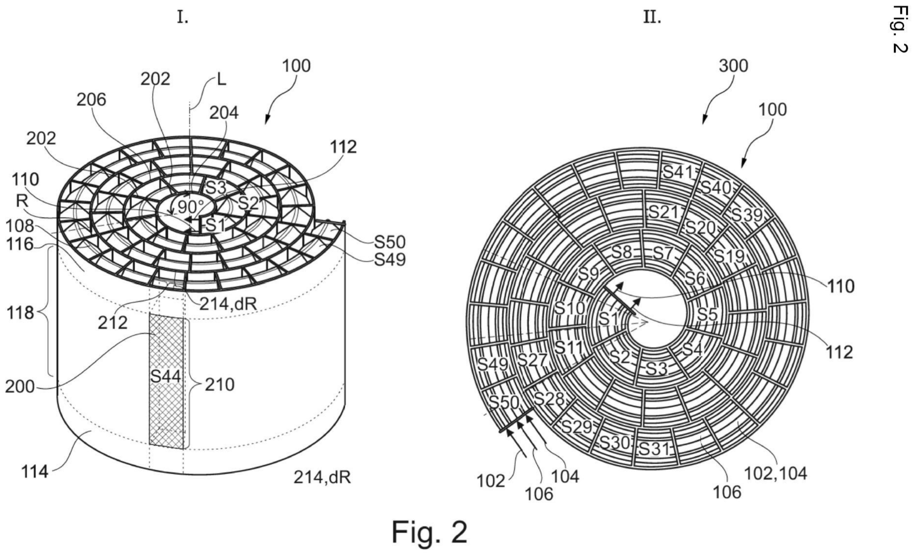

Reactor segments 200 directly adjacent in spiral direction each have a common side wall 202, and radially directly adjacent reactor segments 200 have at least partially a common end wall 204, 206. In this case, the common end wall for the radially inner segment 200 represents the outer end wall 206, and the radially adjacent reactor segment 200 represents the inner end wall 206, or a partial area thereof. Further details in this regard are shown and described in more detail in connection with Figure 2. The radially outermost reactor segments 200 have a single outer end wall 206, which faces radially outwards. In an analogous manner, the radially innermost reactor segments 200, which lie directly opposite the longitudinal axis L, have a single inner end wall 204, which faces radially inwards. The first reactor segment 200.1 in spiral direction and the last reactor segment 200.n in spiral direction do not terminally share a common side wall 202 with an adjacent reactor segment 200. These terminal side walls 202 at the free ends can in particular serve as a connection surface for feeding and/or expulsive connection conduits. The outer connection conduits of the reactor 100 are not shown in Figure 1.

Presently, "spiral direction" means along a spiral in the direction of the central longitudinal axis L or away from the central longitudinal axis L. With regard to sequences of e.g. the n reactor segments 200, "in spiral direction" means primarily the profile which has its origin directly at or opposite the longitudinal axis L as the origin of the spiral, so that in the present case, the segment designated as the first reactor segment 200.1 in spiral direction is the segment which is closest to the vertical longitudinal axis L.

The two spiral units 114, 116 with the associated spiral supply or discharge channels 102, 104, 106, 110, 112 are identified primarily for simplified linguistic description only as supply or discharge channels; this is not to be understood restrictively. Owing to the monolithic design by the AM method used for producing the reactor 100, the two spiral units 114, 116 are not in the actual sense independent structural units which can be separated from the connected n reactor segments 200, since usually there is a common intermediate ceiling or intermediate floor with the connected reactor segment 200. Thus, the respective spiral unit 114, 116 also refers solely to the group of the respective spiral supply or discharge channels 102, 104, 106, 110, 112.

In Figures 1, 2 and 8, no connecting elements to external pipelines or channels are shown, such as pipe spigots, flanges, screw connectors or the like; these are of course required for the supply and discharge of fluids to the reactor 100 and are therefore provided. In this context, the respective channel 102, 104, 106, 110, 112 can also be suitably implemented at least partially by means of an AM method at the beginning and/or end as a connecting element, such as in particular the aforementioned connecting elements.

In the partial representations I, II of Figure 1, several sensor holders 160 are further shown. The sensor holders 160 have a receiving head 162 and an elongated shaft 164. The receiving head 162 is used for holding and/or mounting a sensor head or sensor interface (not shown). The sensor holders 160 are of substantially the same design in the present case, so that only some of this group have been provided with a reference symbol.

The shaft 161 has an inner channel into which an unshown measuring end of a sensor, which is also not shown, can be inserted. The shaft 164 is closed in the embodiment shown at the end opposite the receiving head 162. This end represents the measurement site of the respective sensor. In the reactor segment 200.09, the two shafts 164 end at different vertical positions on the helical reaction portion 310 of the reaction module 300, and can thus measure the process parameters there, such as the temperature. In an embodiment not shown, the shaft 164 ends in a radially inner reactor segment 200, so that the shaft 164 completely penetrates at least one radially outer reactor segment 200.

In all embodiments shown, the three input-side supply channels 102, 104, 106 form a first, input-side channel portion 120, which limits or closes the interiors 208 of the reactor segments 200 on the input side, and the two output-side discharge channels 110, 112 form a second, output-side channel portion 130, which limits or closes the interior 208 of the reactor segments on the output side.

In the text below, some reference symbols for structural units, elements, portions etc. are used in the figures that are not mentioned again in text in the respective figure, in order to avoid repetition. The reference symbols (reference numbers) have only one meaning overall and should therefore be understood in identical or analogous meaning as is observed in connection with the reference symbol list and/or in connection with a different figure.

In the partial representations I, II of Figure 2, a spiral reactor/reactor 100 analogous to the previous figure is shown, this reactor having n = 50 reactor segments 200. For simplification, the 50 reactor segments are identified as S1 to S50, i.e. S1 corresponds to reactor segment 200.01, S2 corresponds to reactor segment 200.02, S3 corresponds to reactor segment 200.03 and so on up to S50, which corresponds to reactor segment 200.50. The nature of the segmentation is ready recognizable in the plan view of partial representation I. at the top side of the reactor 100 or the expulsive spiral channel unit 116, because the side walls 202 of the respective reactor segments 200 have been continued above the discharge channels 110, 112. This type of continuation of the side walls 202 has the advantage that the individual reactor segments 200.01-n are visually recognizable by a user and, further, these wall sections introduce further rigidity into the reactor 100. The partial view II. shows a view of the underside of the reactor 100 or the underside of the spiral channel unit 116 there. Analogously to the top side, the side walls 202 are brought forward below the feeding channels 102, 104, 106, so that the selected segmentation is recognizable.

The reactor segment S44 is identified separately as a shadow area. It has a width 212 in spiral direction, a diameter 214 in radial direction and a height 210 which extends between the two spiral channel units 114, 116. The width 212 is measured or lies on the centre line, which coincides with the gable line 108 in the example shown.

In particular, in the partial view II, it can be observed that the reactor segments 200.01 (S1) to 200.50 (S50) do not have identical geometries. The first reactor segment S1 in spiral direction has the greatest curvature with respect to the inner end wall 204 and the outer end wall 206, and the side walls 202 are situated trapezoidally opposite each other in a highly angled form. The last reactor segment S50 in spiral direction, on the other hand, has an almost square base area.

The reactor segments 200 are identical or largely identical with respect to the reaction modules 300 and similar with respect to the outer dimensions, i.e. to the volume. The reactor 100 could without significant constructional changes be supplemented by further reactor segments n + x or reduced by a number of reactor segments 200 n - y, where x and y each represent an integral value.

The spiral channel units 114, 116 are separated with regard to the design of the reactor 100 by means of a computer-implemented method as set out herein and are determined independently so that in the event of changes in the size of the reactor 100, when the reaction module 300 is successfully determined, the geometry and the geometry profile of the spiral channel units 114, 116 must be adapted as and when required, in order to ensure identical or substantially identical flow states and/or other thermodynamic states in each reactor segment 200. The essential parameter which is to be adapted in this case is the pressure profile in the channels of the spiral channel units, which can be influenced via variable cross-sectional geometries and/or internals, in particular variable cross-sectional geometries and/or internals in the feeding and/or expulsive channels 120, 130.

Because the reactor 100 is formed of or comprises a multitude of uniform reactor segments and their elements, such as, for example, the side walls 202 and end walls 204, 206, reference symbols are in some cases provided only as examples for individual elements and apply analogously for functionally identical elements.

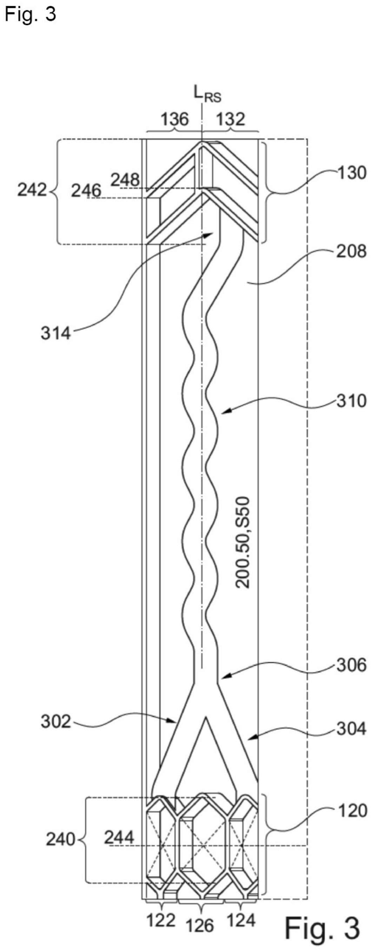

In Figure 3, the exposed reactor segment 200.50 of Figure 2 is shown in a vertical section. The reactor segment 200.50 comprises an interior 208 and a reaction module 300 which comprises two introduction portions 302, 304 for two reactants. The two reactant streams of the two introduction portions 302, 304 are merged in a mixing portion 306, which is adjoined downstream by a reaction portion 310.

A channel portion 120 for the supply of fluids is assigned to the reactor segment 200.50. The assigned channel portion 120, like the further, upper channel portion 130 for the discharge, is characterized in that it lies within the shadow area of the associated reactor segment 200.50. Hence the two channel portions 120 and 130 also have the same width 212 and the same depth 214 as the associated reactor segment 200.50.

The feeding channel portion 120 has three adjacent subportions 122, 124, 126. The adjacent subportions 122, 124, 126 are strictly adjacent in radial direction. In an unshown embodiment, these subportions could also be formed at least partially adjacent to each other in vertical direction. The subportion 122 is also a portion of the supply channel 102, the subportion 124 is also a portion of the supply channel 104, and the subportion 126 is also a portion of the supply channel 106 for the HE medium. In other words, the sum of all channel portions 120 of all n reactor segments 200 represents completely or substantially the associated supply channels 102, 104, 106. This applies in an analogous manner to the discharging channel portions 130 and the discharge channels 110, 112.

The discharging channel portion 130 has two adjacent subportions 132, 136. The adjacent subportions 132, 136 are strictly adjacent in radial direction. In an unshown embodiment, these subportions could also be formed at least partially adjacent to each other in vertical direction.

The first introduction portion 302 of the reaction module 300 is connected to the subportion 122 of the channel portion 120, via which it can be supplied with reactant1. The second introduction portion 304 of the reaction module 300 is connected to the subportion 124, from which it can be supplied with reactant2. The subportion 126 has an opening 127 to the interior 208, so that HE medium can flow freely from the bottom upwards in the interior 208. In the upper subportion 136 there is at least one complementary opening 137 arranged via which HE medium can be received into the discharge channel 112 and can flow off. Via a draining portion 314 of the reaction module 300, which in the example shown is the upper end of the reaction portion 310, product and/or reaction mixture are drained into the channel portion 130 and the associated subportion 132 there. The reaction module 300 is a free-standing channel structure and can be completely surrounded by a flow of HE medium flowing in the entire interior 208. The two reactant streams of the two introduction portions 302, 304 are merged in a mixing portion 306, which is adjoined downstream by a reaction portion 310.

In Figure 3, the theoretical planes 244, 246, 248 are further shown, which are spanned by the main flow lines (not shown) of the respective input-side subportions 122, 124, 126 and output-side subportions 132, 136. The three main flow lines, whose position is sketched by the respective cross of dashed lines, lie in a common plane 244, symbolized by a dashed line, as a result of the shape and position of the construction. The output-side subportions 132, 136 have different cross-sectional geometries, so that the respective main flow lines (not shown) lie in parallel planes 246, 248 which have a distance from each other. All of these planes 244, 246, 248 are transversely aligned relative to the longitudinal axis L of the reactor (not shown) and/or the longitudinal axis of the reactor segment (not shown).

In this case, the input-side channel portion 120 and the output-side channel portion 130 each span a theoretical space 240, 242 or gap which is arranged above or below the interior 208. These theoretical spaces 240, 242 are aligned, like aforesaid planes, at right angles or substantially at right angles to the longitudinal axis L. It is immediately apparent to the skilled person that if the free flow cross section is not of constant size in spiral direction, the main flow directions in the respective subportions will also show slightly different altitudes and inclinations, which should remain insignificant in the present case.

As already observed above, the directly adjacent input-side subportions 122, 124 and 126 and also the directly adjacent output-side subportions 132, 136 close the interior 208 on the respective side of the reactor segment 200.

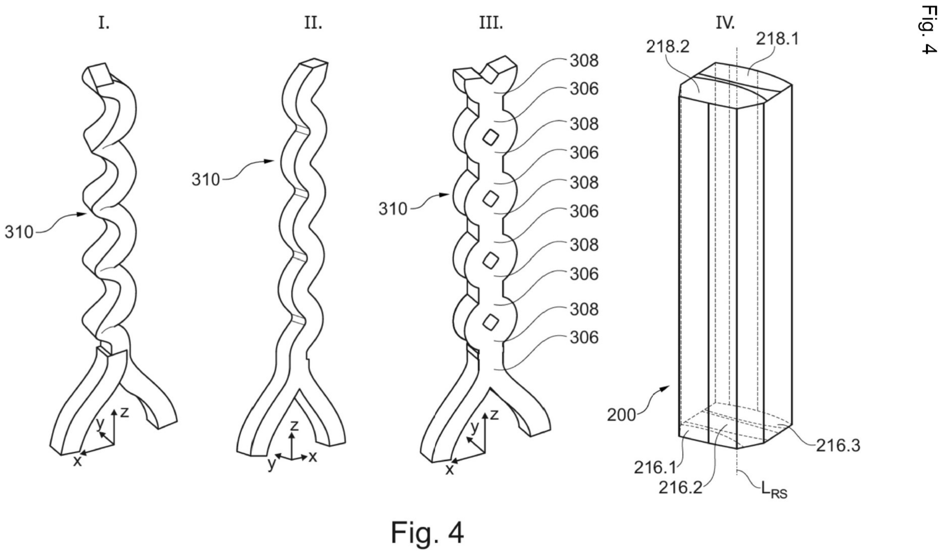

In Figure 4, different reaction modules 300 are shown in three embodiments. All reaction modules 300 have two introduction portions 302, 304, which are merged in at least one mixing portion 306. In an unshown exemplary embodiment, 3, 4, 5 or more introduction portions are provided, which are merged or introduced simultaneously or successively in flow direction.

A characteristic of the reaction module 300 in the

- partial representation I is the spiral winding of the reaction portion 310, via which mixing processes are favoured inside and additionally a throttling is produced inside by cross-sectional constrictions at the buckled portions;
- partial representation II is the uniform, soft flow routing across several S-shaped deflections, via which the flow path through the reactor segment 200 is extended;

- partial representation III is the multiple arrangement of mixing portions 306 and division portions 308, via which the flow path through the reactor segment 200 is extended and very good physical mixing is brought about.

In a manner not shown, analogously to Fig. 3, the introduction portions 302, 304 of the reaction modules 300 are each connected to a subportion 122, 124 of the channel portion 120 and can be supplied thereby with reactant. Likewise, the respective draining portion 314 of the reaction module 300 and the upper ends of the respective reaction portions 310 of the reaction modules 300 are connected to a channel portion 130 and the respective subportions 132, so that a reaction mixture can be thereby discharged.

The partial representation IV shows the outer contour of a reactor segment 200. At the lower end therein, the inlet-side open faces 216.1, 216.2 and 216.3 are drawn, which are available for the penetration of an introduction portion 302, 304 for the reactants or of the introduction portion 305 for the HE medium purely arithmetically in each reactor segment 200, regardless of the position along the spiral, remaining open for connection to the respective supply channel 102, 104, 106. In an analogous manner, in the partial representation IV, at the upper end of the contour of the reactor segment 200, the outlet-side open face 218.1 for the reaction mixture and the open face 218.2 for the HE medium are drawn in hatched form, via which purely arithmetically in each reactor segment 200, regardless of the position along the spiral, remaining open, connection can be made to the respective discharge channel 110, 112 or the respective channel portion 130 and the associated subportion 132, 136 (not shown).

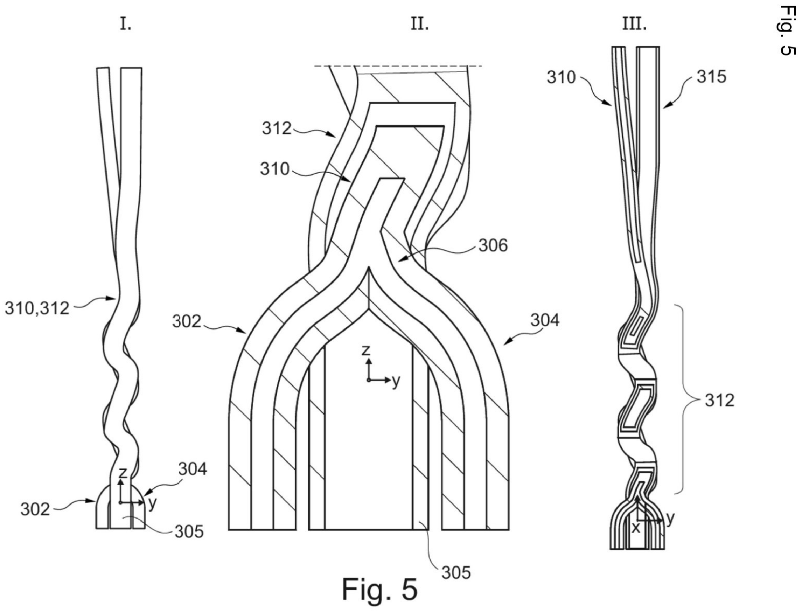

In Figure 5, an embodiment of a reaction module 300 is shown in three partial views I., II. and III., in which there is a pipe-in-pipe arrangement for a subsection of the reaction portion 310. The partial view I. shows a lateral plan view of the reaction module 300, the partial view II. shows in an enlargement and vertical sectional representation the inlet-side pipe or channel elements of the reaction module 300, and the partial view III. shows the entire length of the reaction module as a vertical sectional representation. On the inlet side, analogously to Fig. 4, two introduction portions 302, 304 are arranged, for one reactant each or for two reactant streams. The mixing portion 306 and the reaction portion 310 over a partial length are sheathed by the channel or pipe in which the HE medium can be carried. As can be clearly seen in particular in the partial view II., a pipe-in-pipe arrangement is present and the HE medium can flow in the annular gap between the inner pipe, which carries the reaction mixture, and the outer heat exchange pipe (HE pipe). The cross-sectional geometries of the pipes are shown in Figure 5 as square or almost square; basically, any round, oval or polygonal cross-sectional structure can be provided. In the partial view III. it can be seen that the reaction portion 310 is surrounded, over the first partial length, as observed above, by the pipe that carries the HE medium, and so there is an HE portion 312 formed there, indicated with a curly bracket. In the second partial length, downstream of the HE portion 312, the reaction portion 310 is led out of the pipe carrying the HE medium, and the two pipes or pipe portions run substantially without heat exchange with spacing from each other up to the respective connection (not shown) to the discharge channels 110, 112. Such partial integration of the reaction portion 310 into an HE tube may be advantageous if there is only a small, initially exothermic temperature evolution, so that further cooling would slow down the chemical reaction undesirably. Furthermore, a partial integration through a pipe-in-pipe arrangement could be advantageous in order to initiate an endothermic reaction which thereafter can take place independently without further supply of energy. Furthermore, the volume flows of the HE medium are reduced as much as possible in this intimate connection between reaction portion 310 and HE pipe, thereby relieving all conveying units and reducing the overall size of the reactor.

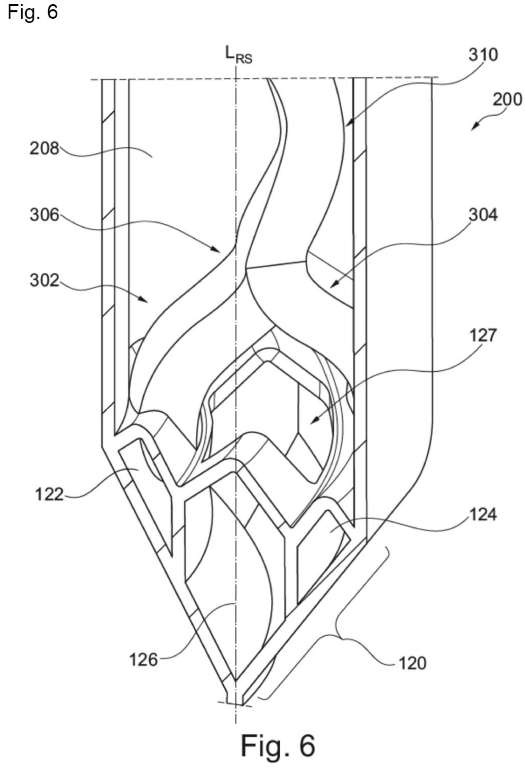

In Figure 6, the lower part of an exposed reactor segment 200 is shown. The two introduction portions 302, 304 are connected to the respective subportions 122, 124 of the introductory channel portion 120. The central subportion 126 is used for the supply and introduction of HE medium and has a supply opening 127, which does not lead into a pipe or a channel but instead represents an opening to the interior 208 of the reactor segment 200. The HE medium introduced in this way can flow freely in the interior 208 and in this case, in particular, can flow around the reaction portion 310 for heat exchange.

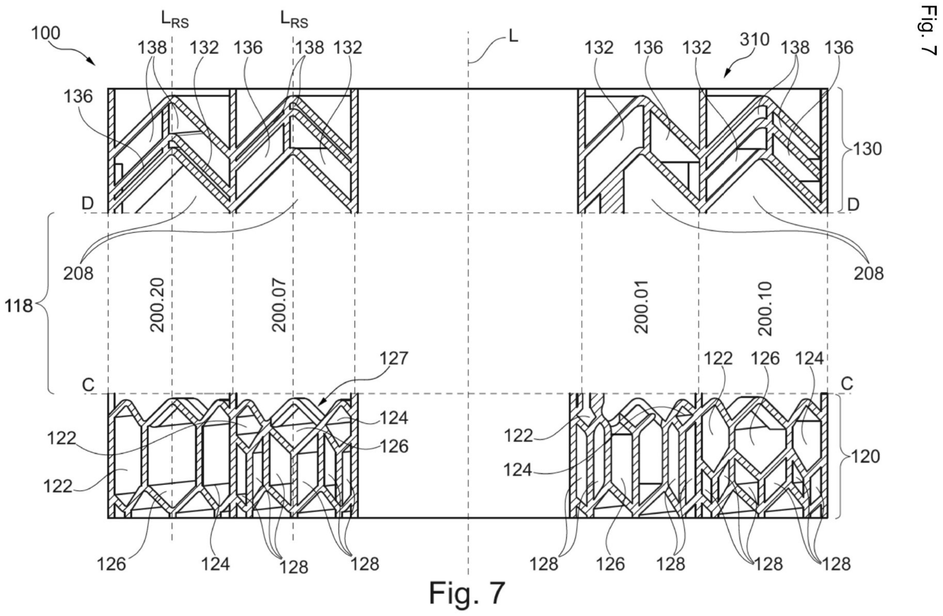

Figure 7 shows a vertical section through four reactor segments 200, identified here as 200.01, 200.07, 200.10 and 200.20, with substantially only the channel portions 120 of the supply conduit being shown at the bottom and the channel portions 130 of the discharge conduit at the top. The representation is essentially a sectional representation of Figure 1 and Figure 8, where in Figure 8 the sectional lines A--A, B--B are drawn. The reactor segment 200.20 is the first reactor segment 200 in the flow direction of the supply channels (not shown), so that in the associated channel portion 120, the subportions 122, 124, 126 with the largest cross-sectional areas are arranged, because all three fluid streams (reactant1, reactant2 and HE medium) arrive here and for the first time a partial volume flow is diverted to the reactor segment 200.20. These subportions are hexagonal honeycomb structures in the vertical sectional image in the exemplary embodiment shown. The respective longitudinal axis $L_{RS}$ is drawn in two of the four reactor segments, which are oriented parallel to the longitudinal axis L of the reactor 100.

For the respective channel portion 120 of the supply conduit, the lower-numbered reactor segments 200.10, 200.07, 200.01 have not only the fluid-carrying subportions 122, 124, 126 but also non-flow-traversed subportions 128 within the overall structure. The feeding channel portions 120 with the associated subportions 122, 124, 126, 128 have the same or substantially the same outer dimensions over all reactor segments 200, which feature a multiple gable or roof structure in the vertical sectional image presently, wherein the inner subportions 122, 124, 126, 128 have honeycomb structures that vary in shape and size.

The non-flow-traversed subportions 128 of the feeding channel portions 120 are designed only in order to constructionally apply the necessary flow cross section, becoming smaller in flow direction, of the fluid-carrying subportions 122, 124, 126. These non-flow-traversed subportions 128 are continuously or gradually enlarged in cross section in flow direction because of the branches and the resulting decreasing volume flow in the respective channel portions 120. Thus, in flow direction, the last reactor segment 200.01 in the associated expulsive channel portion 120 has the largest non-flow-traversed subportions 128, whereas the flow-traversed subportions 122, 124, 126 have the smallest cross-sectional areas. For the parallel-connected feeding channel portions 120 in between, the cross-sectional areas of the non-flow-traversed subportions 128 increase analogously, and the flow-traversed subportions 122, 124, 126 are correspondingly reduced.

In the last reactor segment 200.20, the subportions 132, 136 of the associated, discharging channel portion 130 have the smallest cross-sectional areas, because here only the discharged fluid streams (product and HE medium) of the last reactor segment 200.20 arrive. The last reactor segment 200.20 in spiral direction, which is the first segment in the flow direction of the reactants, receives the reactants first. Thus, in the flow direction of the products, it is also the beginning of the discharge channels 110, 112 arranged on the outlet side. The channel portions 130 with the associated subportions 132, 136, 138 have the same or substantially the same outer dimensions over all reactor segments 200, which in the vertical sectional image presently represent a roof structure with internal subportions 132, 136, 138. The subportions 138 comprise cavities or chambers which have no influx or efflux, or are not intended for the discharge of product or HE medium. These non-flow-traversed subportions 138 are formed within the overall structure, here roof structure, of the expulsive channel portions 130 only in order thereby to constructionally apply the necessary flow cross-section in the fluid-carrying subportions 132, 136. These non-flow-traversed subportions 138 are reduced in their flow cross section continuously or gradually in flow direction, owing to the increasing influx of fluids, so that the last reactor segment 200.01 in flow direction in the associated expulsive channel portion 130 has no non-flow-traversed subportion and the flow-traversed subportions 132, 136 have the largest cross-sectional areas. For the parallel-connected, interposed expulsive channel portions 130 of the reactor segments 200.19 to 200.2, the cross-sectional areas of the non-flow-traversed subportions 138 decrease analogously, and the flow-traversed subportions 132, 136 are correspondingly enlarged. As can be seen in particular in Figures 1 to 8, the channel portions 120, 130 form the lower and upper end of the respective reactor segments 200 and close the respective interior of the associated reactor segment in the direction of the longitudinal axis $L_{RS}$.

In Figure 8, in perspective illustrations I., II., the two spiral channel units 114, 116 are shown opposite each other. The partial representations I. and II. are horizontal sectional representations made on the side of the reactor segment 200 directly above and below each channel portion 120 and 130, respectively. The sectional lines C-C, D-D are drawn in Figure 7.

As an example, three reaction modules 300 are sketched as dashed lines and show the connection between the inlets of the channel portions 120 in the input-side spiral channel unit 114 and the outlets of the channel portions 130 in the output-side spiral channel unit 116. The inlets correspond to the pipe or channel starts of the introduction portions 302, 304, and the outlets correspond to the pipe or channel ends of the draining portion 314, or to the end of the reaction portion 310. The HE medium is introduced via the (supply) openings 127 in the subportion 126 into the unillustrated interior 208 of the reactor segment 200, flows freely through the likewise unillustrated interior 208, and is discharged via the (discharge) opening 137 from the interior 208 and into the middle subportion 136. Because the spiral channel units 114, 116 are formed of or comprise a multitude of uniform segments and their elements, such as, for example, the introduction portions 302, 304, reference symbols are in some cases provided only as examples for individual elements and apply analogously for functionally identical elements.

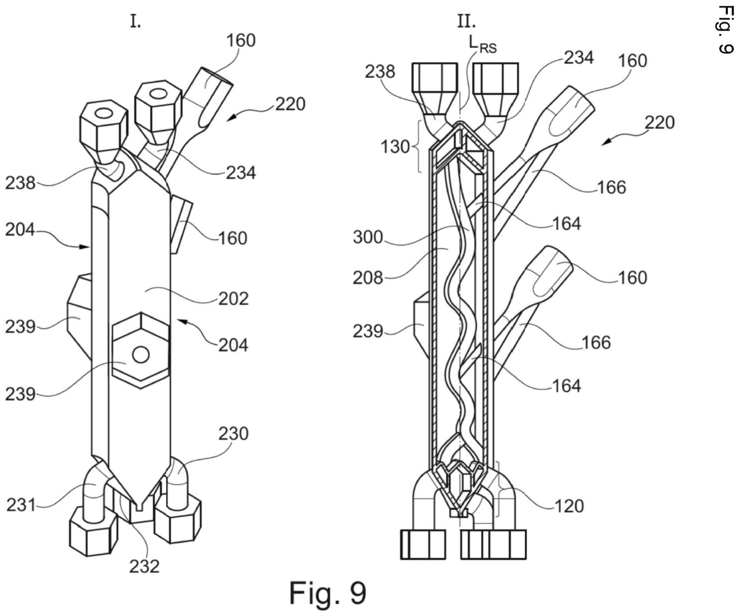

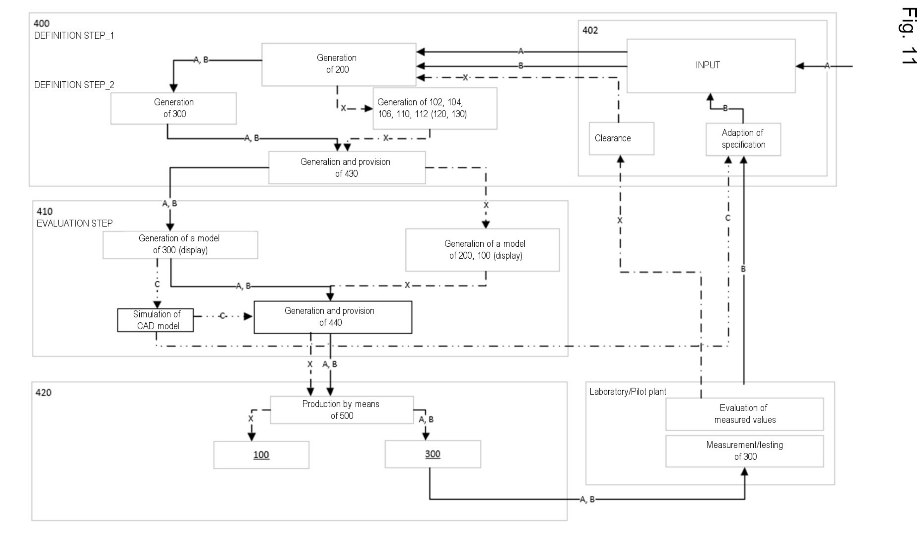

In Figure 9, an evaluation segment 220 in an embodiment with a reaction module 300 is shown in two perspective representations. The evaluation segment 220 is determined by means of the first program module 400 (see Fig. 11) and forms a prototype reactor, which can be multiplied n-fold and assembled in the aforementioned manner to give a single reactor 100, or can essentially form said reactor.

In contrast to the aforesaid reactor segments 200, the evaluation segment 220 comprises all the necessary feed and expulsion means for the operation and testing of the evaluation segment 220. These are, on the input side, a first connection 230 for a first reactant, a second connection 231 for a second reactant, and a third connection 232 for an HE medium. On the output side, a first outlet 234 for the reaction mixture or the product and a second outlet 238 for the HE medium are provided. In the example shown, all external connections and outlets are embodied as screw connectors. Sealing elements that may be required can be provided in a known manner (not shown). Furthermore, on the outside, here on the side walls 202, respective fastening units 239 are arranged, which can be generated in particular likewise by means of an AM method, so that very easy attachment into an existing holding and supporting device can take place, in order to operate the evaluation segment 220 subsequently under real conditions in the laboratory or pilot plant.

On the input side, the evaluation segment 220 is formed as already described in connection with Fig. 6. On the output side, the evaluation segment 220 has a channel portion 130, which, however, leads directly via openings to the outlets 234, 238 for the reaction mixture (product) and the HE medium. Analogously, reactants and HE medium which are fed in the channel portion 120 are guided completely via the flow paths described above through the evaluation segment 220 and the interior 208, respectively.

The evaluation segment 220 represents a tubular reactor equipped with two sensor holders 160. The guide shafts 164 of the two sensor holders 160 extend through the end wall 204 and the interior 208 up to the reaction module 300, so that two measuring locations are arranged at different heights on the wall of the reaction portion 310. The evaluation segment 220, but for the supply and discharge conduits, is in particular very largely structurally identical to the reactor segments 200 of a reactor 100; in particular, the flow sections and flow cross sections for reactants, HE medium, reaction mixture and product correspond already to the later reactor segments 200 of a planned reactor 100. For the evaluation segment 220, more sensor holders 160 are generally provided than is necessary or useful for the later reactor 100. In this way, however, it is possible to determine advantageous process parameters, which are subsequently useful in the operation of the reactor 100 derived from the respective evaluation segment 220 and/or which provide indications of a different constructional solution for, for example, the reaction module 300.

Hence it is now possible to carry out measurement under real process parameters, such as, in particular, pressure, temperature, mixing ratios of the reactants, etc., on a laboratory or pilot plant scale at a fraction of the subsequent reactor performance or its throughput, without having to subsequently carry out a scale-up with altered constructional boundary conditions. This is possible in particular because the reactor segment 200 and thus also the evaluation segment 220, despite multiplication, are decoupled from the influences of the incoming and outgoing fluid streams.

For the development of the reactor 100 according to Figure 1, this means, for example, that by means of a number of m different evaluation segments 220, each of which has a constructionally different reaction module 300, under real conditions m variants can be measured experimentally in parallel in the laboratory or pilot plant, with in each case only a 1/50 of throughput. Thus, the best solution constructionally can be determined and subsequently the spiral reactor 100 can be produced using AM methods and operated for the intended production of a product, with virtually no scale-up effects or typical scale-up risks.

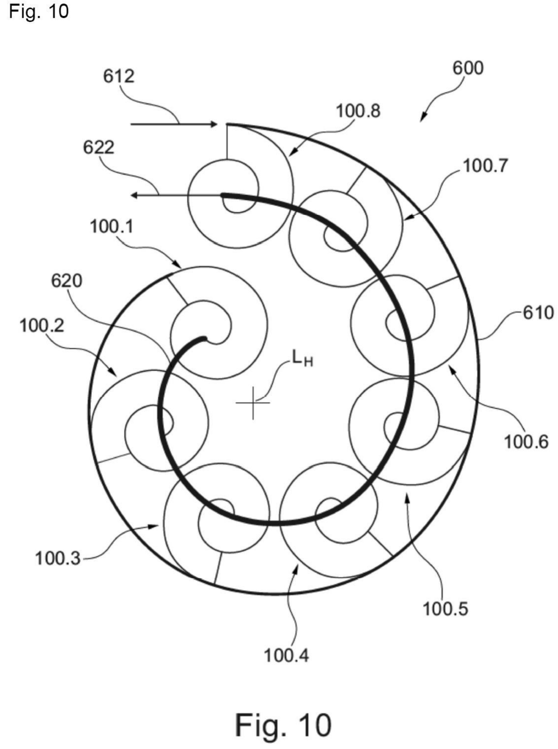

The reactor concept in Figure 10 shows a hyperreactor 600, which comprises a plurality of p individual reactors, where in the example shown the plurality p = 8, composed of the individual reactors 100.1 to 100.8. The hyperreactor 600 is therefore geometrically and functionally similar to the above-described (spiral) reactor 100 and the individual reactors 100.p. The individual reactors 100.1 to 100.8 correspond to the spiral reactors as described herein and/or illustratively described and shown in one of the figures. The hyperreactor 600 extends along a longitudinal and vertical axis $L_H$ which is aligned parallel to the longitudinal or vertical axes L of the reactors 100.1 to 100.8. Furthermore, the hyperreactor 600 comprises a supplying superior spiral 610 on the input side and a discharging superior spiral 620 on the output side, which, in the same way as the spiral channel units 114, 116, comprise supply channels or discharge channels. The individual reactors 100.1 to 100.8 of the hyperreactor 600 are connected in parallel to each other. The non-detailed supply and discharge channels of the superior spirals 610, 620 are formed and/or shaped in such a way that identical or largely identical process properties, in particular identical or largely identical fluid-dynamic conditions, are present at the eight branches to and/or from the respective individual reactor 100.1 to 100.8, as already observed in a similar way for the reactor 100. The supplied fluids for the hyperreactor 600, in particular reactants and HE media, are summarized with an arrow as feed 612, and the discharged fluids, in particular product and HE media, are summarized with an arrow as outlet 622. Overall, the hyperreactor 600 and in particular the design of the superior spirals 610, 620 is similar to the (spiral) reactor 100.

An embodiment of the computer-implemented method according to the invention is shown in Figure 11 and is used for the digital modelling and production of a chemical reactor, for example according to one of the previous embodiments or variants.

For carrying out the method, essentially two program modules 400, 410 are provided, wherein the first program module 400 is a script-based module which comprises an interpreter. The first program module 400 further comprises a memory element or memory regions, which are not identified, in which script files, classes and methods are retrievably stored.

The method comprises two main phases, the FIRST PHASE and the SECOND PHASE, and begins in the FIRST PHASE with the definition step 1 and the INPUT of an input data set into the interpreter 402 of the first program module 400, with a reactor segment being designed. The first sequence is here marked "A" in the flow arrows.

The INPUT is made by a user via a suitable human-machine interface, such as a monitor and/or a keyboard, wherein an input and output window for editing is provided by the interpreter 402. The input data set comprises the target performance of the synthesis or the reactor 100, the number of reactants, the maximum reactor space (circumference, height), the division factor 1/n and/or the desired number of reactor segments, etc. The input data set also includes the initial determination of the proportional cross-sectional areas of the feed channels 102, 104, 106 and the number of discharge channels 110, 112.

By means of the interpreter 402, the instruction can be given "get/calculate data", to determine how many reactor segments 200 can actually be arranged for a given diameter of the reactor 100. This can be done without having to give the instruction "plot_CAD" (representation of the 3D model of the reactor), which would have to be executed by the second program module 410, the CAD program, and which is far more time-consuming.

In the definition step 2, the reactor segment (200) is subsequently derived with the first program module 400 as an evaluation segment and designed, and, in particular, external connections for the operation and supply and discharge of the fluids are supplemented, as far as this is necessary for the planned reactor.

The subsequent evaluation step comprises:

- creation of a 3D model and display of the evaluation segment (220) in the second program module 410, provision of a construction data set by the second program module 410 for a subsequent AM device or the subsequent AM method.

  - physical production of the evaluation segment (220), according to the construction data set provided, by means of the AM device in an AM method.
  - real operation of the evaluation segment 220 and synthesis of a product with recording of at least one significant process measurand for a defined test run time.
  - evaluation of the recorded measured values of the recorded process measurands.

In the non-specification case of the evaluation segment 220 tested, the first phase is repeated starting with the definition step 1 with a modified input data set, as is symbolized by the process arrow with the identifier B. The change to the input data set affects at least one parameter of the reactor 100 and/or reactor segment 200. This repetition is presently shown only for the first run "A" and a repetition run "B", but basically can be repeated as often as required or else be terminated definitively if a specification-compliant solution is not found. In this method, the evaluation step comprises at least one option for simulating at least one process parameter based on the digital CAD model (partial run C), as outlined with the connection lines marked with "C". If here the non-specification case of the CAD model of an evaluation segment 220 measured by means of simulation is determined, advantageously there is no generation and provision of a construction data set 440, but instead there is a specification adjustment directly in the interpreter 402.

In the specification case, subsequently, the construction data set 440 is generated and provided and the further steps described take place. Optionally, the generation and provision of the construction data set 440 and the further steps can subsequently take place automatically or by controlling input by a user, even in the non-specification case, in order, for example, to evaluate even negative simulation results (non-specification case) in the laboratory or pilot plant.

In the specification case of the evaluation segment 200, the SECOND PHASE follows, which begins with the clearance and is symbolized by the process arrows with the identifier "X". The clearance here is the input of a command into the interpreter 402 by a user.

In a SECOND PHASE, an export data set 430 for the reactor 100 is generated by means of the first program module 400 and provided to the second program module 410.

By means of the second program module 410, a digital 3D model of the reactor 100 is generated and displayed. Subsequently, a construction data set 440 is provided by the second program module 410 for an AM device and/or wherein the reactor 100 can be physically produced by means of the AM device in an AM method.

Here, the first program module 400 is a scripting program based on Python 2.7 and the second program module 410 is presently the CAD software ANSYS Discovery 2023, which includes the first program module and the interpreter 402 in integrated form.

The export data set 430 generated in the first program module 400 for the reactor 100 observes and comprises the n directly adjacent reactor segments 200.1 to 200.n, which are arranged parallel to each other with respect to their longitudinal axes and along the feed channels 102, 104, 106 and the discharge channels 110, 112. Furthermore, it is notable that each of reactor segments 200.1 to 200.n or the respective reaction modules 300 has a connection to the respective feed channel 102, 104, 106 and a connection to the respective discharge channel 110, 112.

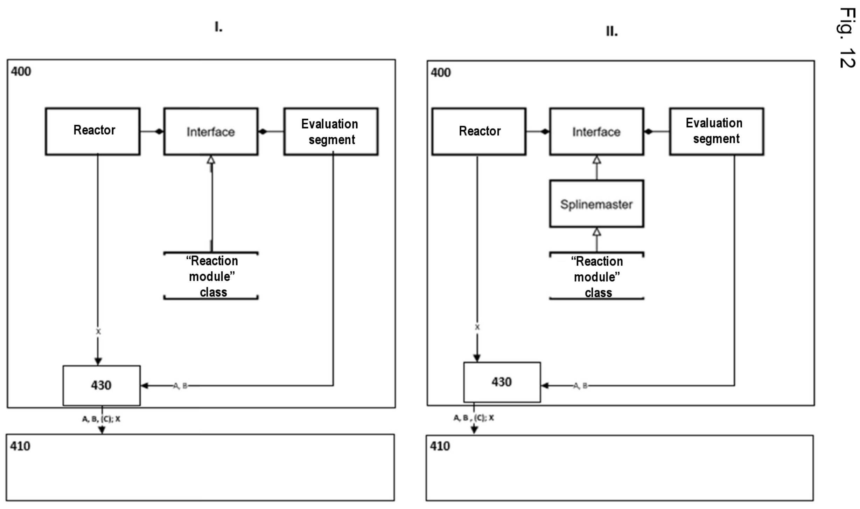

In Figure 12, the dependencies of the classes of the first program module 400 are shown as a block flow diagram, as it is used in the method. In the left-hand partial representation I, the "reaction module" class is the first sub-class and is directly dependent on the primary "interface" class (super-class). In the partial representation II, the "splinemaster" class is the first sub-class, which is directly dependent on the "interface" super-class, whereas the "reaction module" class is subordinate to the "splinemaster" class. This is the preferred hierarchy of the classes, because all reaction modules have at least one spline (path, line, thread) along which the flow is to take place, so that along this at least one spline a cross-sectional geometry must be arranged, for forming the corresponding three-dimensional channel structure of the reaction module.

Here, the "interface" class includes the instruction: plot_CAD_interface, the "reaction module" class includes the instruction: plot_CAD_module, the "evaluation segment" class includes the instruction: plot_CAD_prototype, and the "reactor" class includes the instruction: plot_CAD_reactor. These plot instructions compile all the data and attributes that are provided as an export file to the second program module 410, the CAD software, and are required by them in order to be able to generate and display the corresponding 3D model.

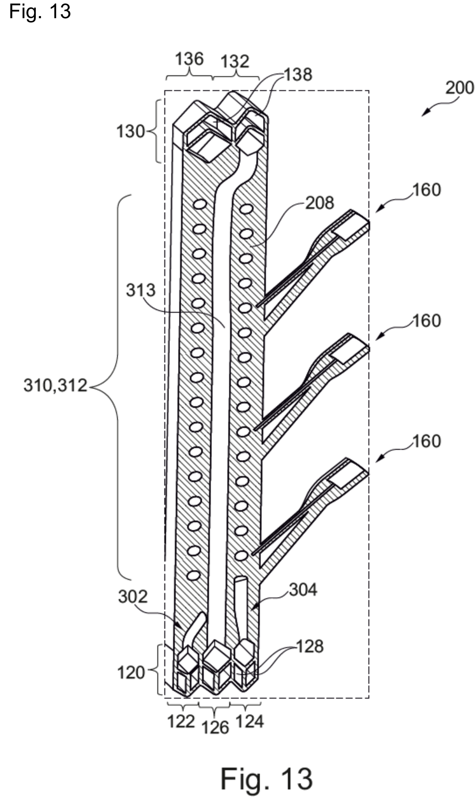

In Figure 13, a further exposed reactor segment 200 is shown in a vertical section. The reactor segment 200 comprises an interior 208 and a reaction module 300 which comprises two introduction portions 302, 304 for two reactants. The two reactant streams of the two introduction portions 302, 304 are combined in a mixing portion (306), which cannot be perceived in the sectional plane and which is adjoined downstream by a reaction portion 310. The fluid channel 313 carrying the **HE** medium is routed centrally and surrounded by a spiral channel carrying the product mixture.

In contrast to the other reactor segments 200 shown in the figures, the interior 208 is formed as solid material, and so is not a cavity but is instead a portion of material which is pervaded by the fluid channel 313 for the **HE** medium and by the channels or channel portions 310, 312, 302, 304 as recesses in the material.

**List of reference symbols**

100 reactor
102 supply channel (reactant1, in circumferential direction (CD))
104 supply channel (reactant2 in CD)
106 supply channel (HE medium in CD)
108 gable line...
110 discharge channel (product, in CD)
112 discharge channel (HE medium, in CD)
114 spiral channel unit (feed, 120-128)
116 spiral channel unit (out, 130-138)
118 reactor portion, central
120 channel portion (supply conduit; = end portion, first of 200)
122 subportion (supply conduit, reactant1, = segment of 102)
124 subportion (supply conduit, reactant2, = segment of 104)
126 subportion (supply conduit, HE medium, 0 segment of 106)
127 supply opening, recess
128 subportion (non-flow-traversed)
130 channel portion (discharge conduit; = end section, second of 200)
132 subsection (discharge conduit, product)
136 subsection (discharge conduit, HE medium)
137 discharge opening, recess
138 subportion (non-flow-traversed)
140 central supply conduit
142 connecting element, central supply conduit (feed1, reactant1)
144 connecting element, central supply conduit (feed2, reactant2)
146 connecting element, central supply conduit (feed_HE medium)
150 central discharge conduit
152 connecting element, central discharge conduit (product)
158 connecting element; central discharge conduit (HE medium)
160 sensor holder
162 receiving head
164 guide shaft
166 support element
200 reactor segment (RS; to 200.1 to 200.n)
202 side wall (left, right)
204 end wall (inside)
206 end wall (outside)
208 interior
210 height of 200 (in L-direction; z-axis)
212 width of 200 (circle section, in circumferential direction)
214 depth of 200 (dr in radial direction)
216 open faces (inlet, also 216.1, 216.2, 216.3)
218 open faces (outlet, also 218.1, 218.2)

220 evaluation segment ("prototype reactor")
230 connection (first) of 220
231 connection (second) of 220
232 connection (third, HE medium) of 220
234 outlet (first) of 220
236 outlet of 220
238 outlet (HE medium) of 220
239 fastening unit
240 space (input side, theoretical)
242 space (output side, theoretical)
244 plane (input side, theoretical)
246 plane (output side, theoretical)
248 plane (output side, theoretical)
250 spacing segment (empty segment)
300 reaction module (RM of 200 in 208)
300a, 300b reaction module of 220, 222
302 introduction portion (reactant1, in)
304 introduction portion (reactant2, in)
305 introduction portion (HE medium)
306 mixing portion
308 division portion
310 reaction portion
312 HE portion
313 fluid channel for HE
314 draining portion
315 draining portion (HE medium)
320 outlet portion (product, out)
350 flow module
400 program module (first, Python)
402 interpreter
410 program module (second) = CAD program
420 program module (third) = control program for AM
430 export data set
440 construction data set
500 additive manufacturing device
600 hyperreactor
610 superior spiral, supply conduit
620 superior spiral, discharge conduit
A run; first
B run; second
D(r) radius portion of 200 in R-direction
EEIN, EAUS planes
L longitudinal or vertical axis of 100
$L_H$ longitudinal or vertical axis of 600
$L_{RS}$ longitudinal axis of 200
R radius
X run, cleared

**Claims**

1. Reactor (100) for the synthesis of at least one product from at least two reactants, wherein the reactor (100) extends parallel to a central longitudinal axis (L) and comprises the following:

    - n reactor segments (200) which also extend parallel to the central longitudinal axis (L), where n is an integral value >= 2, comprising an interior (208),
    a longitudinal axis ($L_{RS}$), at least one reaction module (300) in the interior (208), at least one end wall (204, 206) and/or at least one side wall (202), more particularly two end walls (204, 206) and two side walls (202);

- at least two input-side, common supply channels (102, 104, 106) to the n reactor segments (200) for the at least two reactants and optionally an HE medium;
- at least one output-side, common discharge channel (110, 112) from the n reactor segments (200) for the at least one product and optionally the HE medium, **characterized in that**

the central longitudinal axis (L) is a central spiral axis, wherein the reactor segments (200) are arranged directly adjacent in spiral direction around the central longitudinal axis (L), and wherein the at least two input-side, common supply channels (102, 104, 106) are embodied spirally and/or the at least one output-side, common discharge channel (110, 112) is embodied spirally.

2. Reactor according to Claim 1, **characterized in that** the reactor segment (200) has end walls (204, 206), wherein the end walls (204, 206) of the n reactor segments (200) represent segments of a spiral face and/or spiral wall; in particular, the end walls (204, 206) and/or their segments together embody a continuous, spiral wall or wall face.

3. Reactor according to Claim 1 or 2, **characterized in that** the spiral

i) is an Archimedean spiral and the central longitudinal axis (L) is the central spiral axis of the Archimedean spiral, or
ii) is a circle involute and the central longitudinal axis (L) is the central spiral axis of the circle involute or the centre point of the central unit element, more particularly of the unit circle or unit square.

4. Reactor according to any of the preceding claims, **characterized in that** the end walls (204, 206) are segments of an Archimedean spiral.

5. Reactor according to any of the preceding claims, **characterized in that** at least one of the input-side, common supply channels (102, 104, 106) has a diminishing flow cross section in flow direction and/or the at least one output-side, common discharge channel (110, 112) has an expanding flow cross section ($SQ_{AUS}$) in flow direction.

6. Reactor according to Claim 5, **characterized in that** the change in the area (areal size) of the respective increasing or decreasing flow cross section is formed in spiral direction for at least one location, for at least one subsection and/or in a subportion (122, 124, 126, 132, 136) at least as a function of the area total of the flow cross sections of the fluid channels of the reactor segments (200) connected upstream.

7. Reactor according to any of the preceding claims, **characterized in that** the reactor comprises n input-side channel portions (120) and n output-side channel portions (130), wherein

- the at least two input-side, common supply channels (102, 104, 106) each are or represent overall at least one subportion (122, 124, 126) of the respective input-side channel portion (120), and/or
- the at least one output-side, common discharge channel (110, 112) each is or represents overall at least one subportion (132, 136) of the respective output-side channel portion (130), and wherein respectively one input-side channel portion (120) and one output-side channel portion (130) are each assigned to a reactor segment (200) whose reaction module (300) in the respective channel portion (120, 130) is connected to the respective supply or discharge channel (102, 104, 106; 110, 112).

8. Reactor according to Claim 7, **characterized in that** at least one channel portion (120, 130) comprises at least one non-flow-traversed subportion (128, 138).

9. Reactor according to either of Claims 7 and 8, **characterized in that** the channel portion (120, 130) and/or at least one subportion (122, 124, 126, 128, 132, 138) has the shape, at least over a partial length in cross section, such as a polynomial, more particularly of a pentagon, hexagon, rhombus or parallelogram.

10. Reactor according to any of the preceding device claims, **characterized in that** the reactor segments (200) have (substantially) at least two (radially aligned) side walls (202, 204) aligned transverse to the circumferential direction, and at least two end walls (204, 206) aligned in spiral direction, wherein the reactor segments (200) with their side walls (202, 204) are arranged directly adjacent in spiral direction around the longitudinal axis (L), wherein more particularly two reactor segments (200) adjacent in spiral direction each have a common side wall (202, 204).

11. Reactor according to any of the preceding claims, **characterized in that** the reactor segments (200) or their theoretical interior (208), minus inner fluid channels and/or channel structures which are formed and/or determined by the reaction modules (300), are shaped monolithically, more particularly shaped from a single material.

12. Reactor according to any of the preceding Claims 1 to 9, **characterized in that** the reactor segments (200) have a flow-traversable interior (208) and are connected to a feed channel (106) for an HE medium via a recess as supply opening (127) in the associated subportion (126) and via a recess as discharge opening (137) in the associated subportion of the discharge channel (112) for the HE medium, so that the HE medium can flow freely in the flow-traversable interior (208).

13. Reactor according to any of the preceding device claims, **characterized in that** two reactor segments (200) adjacent in radial direction each have the partial face of an end wall (204, 206) as common end wall (202, 204).

14. Reactor according to any of the preceding device claims, **characterized in that** at least one side wall (202) and/or at least one end wall (204, 206) of at least one reactor segment (200) has a surface or surface profile which is round, concave or curved towards the interior (208).

15. Reactor according to any of the preceding device claims, **characterized in that** the at least one reaction module (300)

   - is arranged in the interior (208) of the reactor segment (200) so as to be amenable to surrounding flow on all sides,
   - is arranged at least for a partial length on the surface of an end wall and/or side wall (202, 204), wherein the respective end wall and/or side wall (202, 204) forms at least one wall or a wall portion of the reaction module (300) over at least a partial length, or
   - is embodied as a pipe-in-pipe system or pipe-on-pipe system, **in that** a fluid channel carrying an HE medium, the heat exchange portion (312), at least partially, in particular completely, surrounds the reaction portion (310), at least over a partial length.

16. Reactor according to any of the preceding device claims, **characterized in that** connecting elements (140) for the feeding of substances and media are arranged only adjacent to the last reactor segment (200) and connecting elements (150) for the discharge of substances and/or media are arranged only adjacent to the last reactor segment (200).

17. Computer-implemented method for digitally modelling and producing a (chemical) reactor (100) for a target performance of a synthesis of a product from at least two reactants/reactant streams, comprising at least two feed channels (102, 104, 106), at least one expulsion channel (110, 112), n parallel-connected reactor segments (200) each comprising a longitudinal axis (L) and a reaction module (300), wherein n is an integral value greater than or equal to 2, wherein

   in a **FIRST PHASE**

   - at least one reactor segment (200) with a reaction module (300) is designed, as a function 1 / n of the reactor (100), with a **first program module** (400) **(definition step 1)**, wherein
   - the at least one reactor segment (200) is designed with the **first program module** (400) as an evaluation segment (220) **(definition step 2),** wherein each evaluation segment (220, 222) has connections for all fluids required for the operation of the reactor (100), wherein an **evaluation step** comprises:

      - creation of a model and display of the at least one evaluation segment (220) in a **second program module** (410), provision of at least one construction data set by the second program module (410) for an additive manufacturing device (AM device), and wherein the at least one evaluation segment (220) is produced physically by means of the AM device in an additive manufacturing method (AM method),
      - the (real) operation of the at least one evaluation segment (220) takes place with recording of at least one significant process measurand for a defined test run time,
      - the recorded measured values of the at least one process measurand recorded are evaluated, wherein

         i) in the non-specification case of the evaluation segment (220), the first phase is repeated starting with the definition step 1, wherein at least one parameter of the reactor (100) and/or of the reactor segment (200) is changed; in particular, a reaction module (300) and/or at least one parameter of the reaction module (300) is changed, and

**ii)** in the specification case of the evaluation segment (200),

in a **SECOND PHASE,** an export data set to the reactor (100) is generated by means of the first program module (400) from n parallel-connected, specification-compliant reactor segments (200) corresponding to the specification-compliant evaluation segment (220), and wherein the reactor segments (200) are arranged

- directly adjacent and parallel to each other with respect to their longitudinal axes and
- along the at least one feed channel (102, 104, 106) and the at least one discharge channel (110, 112), and wherein each reactor segment (200) or its reaction module (300) has at least one connection to a feed channel (102, 104, 106) and a connection to at least one discharge channel (110, 112), wherein

in the **second program module** (410), a model, in particular a 3D model, of the reactor (100) is generated, and wherein by means of the second program module (410) the model of the reactor (100) can be displayed, at least one construction data set can be provided by the second program module (410) for an AM device and/or wherein the reactor (100) can be produced physically by means of the AM device in an AM method, **characterized in that** the at least one reactor segment (200), the at least one evaluation segment (220) and/or the at least one reactor (100) is embodied according to any of the preceding Claims 1 to 16.

18. Method according to Claim 17, **characterized in that** in the first definition step, as a function of the reactor (100), in the reactor segment (200) connection faces are defined and established which are available independently of the arrangement of the reactor segment (200) in the sequence of the n reactor segments (200) to each other, as a connection for at least one fluid channel of the reaction module (300).

19. Method according to any of the preceding method claims, **characterized in that** the first program module (400) is embodied for the object-oriented and script-based processing of instructions and programming.

20. Method according to any of the preceding method claims, **characterized in that** the first program module (400) comprises an interpreter as third program module and/or interacts with an interpreter as third program module.

21. Method according to any of the preceding method claims, **characterized in that** the first program module (400) is connected or is connectable to a memory module, wherein by means of the first program module (400) and/or third program module, source data can be retrieved from the at least one memory module and processed, wherein the source data comprise or represent at least the following:

- classes and/or methods in the script language,
- at least one reaction module (300), in particular a reaction module (300) which can be parameterized in the script language.

22. Method according to any of the preceding method claims, **characterized in that** the reactor (100) is a spiral reactor and in the **SECOND PHASE** the reactor (100) is formed by means of the first program module (400) from n parallel-connected, specification-compliant reactor segments (200), which are arranged along at least one spiral feed channel (102, 104, 106) and/or at least one spiral discharge channel (110, 112).

23. Method according to any of the preceding method claims, **characterized in that** at least one of the following classes are encompassed by the source data and/or are provided on a memory module retrievably for the first program module:

i) a **"reactor segment" class** which is embodied and comprises corresponding constructors and methods which require objects in order to form a 1/n part of the reactor (100) by means of the associated, parameterizable reaction module (300);
ii) an **"evaluation segment" class** which is embodied and comprises corresponding constructors and methods which require objects in order to form an evaluation segment (220) as a 1/n part of the reactor (100) by means of the associated, parameterizable reaction module (300);
iii) a **"splinemaster" class** which is embodied and comprises corresponding constructors and methods which require objects of the "reactor segment" class and/or "evaluation segment" class in order to generate therefrom a 3D model in the second program module (410);
iv) a "reactor" class which is embodied and comprises corresponding constructors and methods which require objects in order to form a reactor (100) from n objects of the segment_class;

v) an "interface" class which is embodied and comprises corresponding constructors and methods in order to function as an interface between objects of the segment_class, the "evaluation segment" class and/or the "reactor" class; and/or

vii) a spiral_channel_class which is embodied and comprises corresponding constructors and methods which require objects in order to form all n reactor segments (200) and the associated, parameterizable n reaction modules (300) as a continuous supply channel (102, 104, 106) or discharge channel (110, 112) of the reactor (100).

24. Method according to method Claim 23, **characterized in that** the "interface" class represents the super-class, for the communication of objects of classes i), ii) and iii), and/or the "splinemaster" class is situated in the inheritance hierarchy below the "interface" class and above the "reactor segment" class.

25. Method according to Claim 23 or 24, **characterized in that** the "spiral channel" class comprises a function or the "spiral channel" class can be used to retrieve a function which is configured, at least for a length or a subsection, to design the cross-sectional geometry

- of the feed channel with a (flow) cross section or flow diameter (SQ1) reducing in flow direction,
- of the discharge channel with a (flow) cross section or flow diameter (SQ1) enlarging in flow direction and/or
- of at least one input-side or output-side channel portion (120, 130) in analogous manner with a changing (flow) cross section or flow diameter (SQ1).

26. Method according to any of the preceding method claims, **characterized in that** the second program module (410) comprises the first program module (400) and/or third program module, and in particular comprises a (script) editor which comprises the first program module (400) and the third program module.

27. Method according to any of the preceding method claims, **characterized in that** the first definition step 1 comprises at least two substeps:

- **input 1:** input of the main reaction and process parameters, such as material flow, reaction temperature, reaction-dependent temperature characteristics;
- **output 2:** automatic, software-based display/output of suitable reaction modules (300) and/or reactor segments, based on calculations and/or database entries;
- **transfer:** automatic or manual transfer of at least one output reaction module (300) and/or at least one reactor segment (200) into the first program module (400).

28. Method according to any of Claims 20 to 27, **characterized in that** the first and/or third program module (400) provides the following:

- automatic, software-based display/output of suitable and/or expected measured values for laboratory-side evaluation,
- costs for the manufacture of the reactor (100), individual reactor segments (200) and/or the reaction modules (300), calculated on the basis of stored data, for example the required materials quantity, materials costs per unit, energy costs per materials quantity, other costs/cost shares.

29. Method according to any of the preceding method claims, **characterized in that** the first program module (400) comprises a versioning/historical function/unit by means of which a hash value is generated and stored as a function of the time of CAD generation; the respective version of the first program module; and the respectively manufactured reactor (100), reactor segment (200) and/or reaction module (300), wherein the hash value is transmitted as data of the construction data set (440) to the program unit (420) of a control program of the additive manufacturing device (500) and is applied to an outer surface of the reactor (100), wherein the hash value allows the first program module to be reset to a functional state at the respective time of generation of the construction data set.

30. Method according to any of the preceding method claims, **characterized in that** the reactor (100) is embodied according to any of Claims 1 to 16, and wherein the reactor (100) is generated physically by means of an additive manufacturing method.

Fig. 1

Fig. 1

Fig. 2

Fig. 2

Fig. 3

Fig. 3

Fig. 4

Fig. 4

Fig. 5

Fig. 5

Fig. 6

Fig. 6

Fig. 7

Fig. 7

Fig. 8

Fig. 8

Fig. 9

Fig. 9

Fig. 10

Fig. 10

Fig. 11

I.

II.

Fig. 12

EP 4 759 405 A1

Fig. 13

Fig. 13

Europäisches
Patentamt
European
Patent Office
Office européen
des brevets

# EUROPEAN SEARCH REPORT

**Application Number**

EP 25 22 1378

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2006/049117 A1 (YAMAGUCHI NORIO [JP] ET AL) 9 March 2006 (2006-03-09)<br>* paragraphs [0048] - [0051]; figures 1-3 * | 1-16 | INV.<br>B01J19/24 |
| Y | US 2010/119421 A1 (AHN JIN-GOO [KR] ET AL) 13 May 2010 (2010-05-13)<br>* paragraphs [0060] - [0066]; figures 4A/4B, 5-6 * | 1-30 | |
| Y | US 2024/261741 A1 (KAMLER JONATHAN [US]) 8 August 2024 (2024-08-08)<br>* paragraphs [0044] - [0052] * | 1-30 | |
| Y | EP 3 603 795 A1 (SIEMENS AG [DE]) 5 February 2020 (2020-02-05)<br>* paragraphs [0044] - [0050], [0073]; figures * | 17-30 | |
| Y | DE 10 2015 115409 A1 (CHOREN IND GMBH [DE]) 12 January 2017 (2017-01-12)<br>* the whole document * | 17-30 | **TECHNICAL FIELDS SEARCHED (IPC)**<br><br>B01J |
| Y | US 2023/264165 A1 (GEUS JOHN WILHELM [NL] ET AL) 24 August 2023 (2023-08-24)<br>* paragraphs [0084] - [0089]; claims; figure 2a * | 1-30 | |
| A | US 2017/183228 A1 (LIN JIEFENG [US] ET AL) 29 June 2017 (2017-06-29)<br>* the whole document * | 1-30 | |
| X,P | WO 2024/251698 A1 (EVONIK OPERATIONS GMBH [DE]) 12 December 2024 (2024-12-12)<br>* claims * | 17-30 | |
| X,P | WO 2025/003208 A2 (EVONIK OPERATIONS GMBH [DE]) 2 January 2025 (2025-01-02)<br>* the whole document * | 1-17 | |

The present search report has been drawn up for all claims

| Place of search | Date of completion of the search | Examiner |
|---|---|---|
| Munich | 27 April 2026 | Kurtulan Dogan, M |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

    ......................................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 22 1378

This annex lists the patent family members relating to the patent documents cited in the above-mentioned European search report.
The members are as contained in the European Patent Office EDP file on
The European Patent Office is in no way liable for these particulars which are merely given for the purpose of information.

27-04-2026

| Patent document cited in search report | | | Publication date | Patent family member(s) | | | Publication date |
|---|---|---|---|---|---|---|---|
| US 2006049117 | A1 | | 09-03-2006 | KR | 20050093851 | A | 23-09-2005 |
| | | | | TW | I337125 | B | 11-02-2011 |
| | | | | US | 2006049117 | A1 | 09-03-2006 |
| | | | | WO | 2004067454 | A1 | 12-08-2004 |
| US 2010119421 | A1 | | 13-05-2010 | KR | 20100052689 | A | 20-05-2010 |
| | | | | US | 2010119421 | A1 | 13-05-2010 |
| US 2024261741 | A1 | | 08-08-2024 | NONE | | | |
| EP 3603795 | A1 | | 05-02-2020 | CN | 110773102 | A | 11-02-2020 |
| | | | | EP | 3603795 | A1 | 05-02-2020 |
| | | | | US | 2020038832 | A1 | 06-02-2020 |
| DE 102015115409 | A1 | | 12-01-2017 | CN | 106339522 | A | 18-01-2017 |
| | | | | DE | 102015115409 | A1 | 12-01-2017 |
| US 2023264165 | A1 | | 24-08-2023 | CN | 116348301 | A | 27-06-2023 |
| | | | | EP | 4204139 | A2 | 05-07-2023 |
| | | | | JP | 2023542051 | A | 04-10-2023 |
| | | | | NL | 2026371 | B1 | 29-04-2022 |
| | | | | US | 2023264165 | A1 | 24-08-2023 |
| | | | | WO | 2022045891 | A2 | 03-03-2022 |
| US 2017183228 | A1 | | 29-06-2017 | EP | 3397380 | A1 | 07-11-2018 |
| | | | | US | 2017183228 | A1 | 29-06-2017 |
| | | | | WO | 2017116792 | A1 | 06-07-2017 |
| WO 2024251698 | A1 | | 12-12-2024 | EP | 4724932 | A1 | 15-04-2026 |
| | | | | WO | 2024251698 | A1 | 12-12-2024 |
| WO 2025003208 | A2 | | 02-01-2025 | CN | 121398904 | A | 23-01-2026 |
| | | | | EP | 4735158 | A2 | 06-05-2026 |
| | | | | WO | 2025003208 | A2 | 02-01-2025 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CAPEL, A. J.** ; **RIMINGTON, R. P.** ; **LEWIS, M. P.** ; **CHRISTIE, S. D.** 3D printing for chemical, pharmaceutical and biological applications.. *Nature Reviews Chemistry*, 2018, vol. 2 (12), 422-436

- **KAYA, U.** ; **GOPIREDDY, S.** ; **URBANETZ, N.** ; **NOPENS, I.** ; **VERWAEREN, J.** Predicting the hydrodynamic properties of a bioreactor: Conditional density estimation as a surrogate model for CFD simulations.. *Chemical Engineering Research and Design*, 2022, vol. 182, 342-359

- **BIEDERMANN, M.** ; **MEBOLDT, M.** Computational design synthesis of additive manufactured multi-flow nozzles.. *Additive Manufacturing*, 2020, vol. 35, 101231